# EUROPEAN PATENT APPLICATION

(11) **EP 4 583 262 A1**
(43) Date of publication of application: **09.07.2025**
(21) Application number: 23923433.9
(22) Date of filing: 24.02.2023
(51) Int. Cl.: H01M 50/103, H01M 50/342

(54) **CASE, BATTERY CELL, BATTERY, AND POWERED DEVICE**

(71) Applicant: Contemporary Amperex Technology (Hong Kong) Limited, Hong Kong (HK)
(72) Inventor: LEI, Yuyong, Ningde, Fujian 352100 (CN); GUO, Zhijun, Ningde, Fujian 352100 (CN)
(74) Representative: Gong, Jinping
(86) International application number: PCT/CN2023/078249
(87) International publication number: WO 2024/174257

(57) **Abstract**

Embodiments of the present application provide a case, a battery cell, a battery, and a powered device, which belong to the technical field of batteries. The case is molded by bending a plate, the head end and the tail end of the plate are connected to each other to define an accommodating space with openings at two opposite ends, and the accommodating space is configured for accommodating an electrode assembly of the battery cell. The case is molded by bending a plate, and the head end wall and the tail end wall of the plate are connected to each other, such that the case with openings at two opposite ends can be formed. The case is molded in a simple manner, such that the molding difficulty of the case is effectively reduced.

## Description

### Technical Field

The present disclosure relates to the field of battery technology, and in particular to a case, a battery cell, a battery, and a powered device.

### Background Art

With the development of new energy technology, batteries are more and more widely used, such as mobile phones, laptops, battery cars, electric vehicles, electric aircraft, electric boats, electric toy cars, electric toy boats, electric toy planes and electric tools.

In battery cells, the case is an important component of the battery cell, and its difficulty in forming directly affects the production cost of the battery cell. Therefore, how to effectively reduce the difficulty of forming the case is an urgent problem to be solved in battery technology.

### Summary

The embodiment of the present disclosure provides a case, battery cell, battery, and powered device that can effectively reduce the difficulty of forming the case.

In the first aspect, the embodiments of the present disclosure provide a case for a battery cell, wherein the case is formed by bending a plate material, and the front and rear ends of the plate material are connected to each other to form an accommodating space having openings at two opposite ends, wherein the accommodating space is configured to accommodate the electrode assembly of the battery cell.

In the above technical solution, the case is formed by bending a plate material, and the front and rear ends of the plate material are connected to each other, thereby forming a case with openings at two opposite ends. The forming method of the case is simple, effectively reducing the difficulty of forming the case.

In some embodiments, the case comprises multiple wall portions forming the accommodating space; the case is equipped with a pressure relief mechanism, and a connection position of the two ends and the pressure relief mechanism are located on two different wall portions. In this way, the connection position and the pressure relief mechanism are not set on the same wall portion, which reduces the influence of the connection position on the pressure relief mechanism, improves the reliability of the pressure relief mechanism, and enables the pressure relief mechanism to release pressure normally in case of thermal runaway of the battery cell.

In some embodiments, the multiple wall portions include a first wall portion and a second wall portion that are oppositely arranged, with the pressure relief mechanism located on the first wall portion and the connection position located on the second wall portion. This ensures that the pressure relief mechanism and the connection position are located on two opposite wall portions respectively, and that the pressure relief mechanism and the connection position are further apart in the circumferential direction of the case, thereby further reducing the impact of the connection position on the pressure relief mechanism.

In some embodiments, the second wall portion comprises a first connecting wall and a second connecting wall arranged opposite to the first wall portion, and the first connecting wall and the second connecting wall respectively form the two ends. In this way, by connecting the first connecting wall and the second connecting wall to each other, the connection between the front and rear ends of the plate material can be achieved, with a simple structure and easy implementation of the connection between the two ends of the plate material.

In some embodiments, the first connecting wall has a first end face, and the second connecting wall has a second end face, wherein the first end face and the second end face are respectively the end faces of the front and rear ends of the plate material, and the first end face is connected to the second end face. On the one hand, it can reduce the length of the plate material, save materials, and lower production costs. On the other hand, the first end face of the first connecting wall and the second end face of the second connecting wall are connected to each other, thereby making the second connecting wall more flat as a whole, which can increase the internal space of the case and help improve the energy density of the battery cell.

In some embodiments, along the thickness direction of the first wall portion, the first connecting wall and the second connecting wall are at least partially stacked and connected to each other. In this way, the difficulty of connecting the first connecting wall and the second connecting wall can be reduced, the connection area between the first connecting wall and the second connecting wall can be increased, and the connection strength between the first connecting wall and the second connecting wall can be improved.

In some embodiments, the case further comprises a third wall portion and a fourth wall portion arranged oppositely, with the third wall portion connecting the first wall portion and the first connecting wall, and the fourth wall portion connecting the first wall portion and the second connecting wall. In this way, the case formed by the first wall portion, the second wall portion, the third wall portion, and the fourth wall portion has a generally quadrangular structure, which is simple in structure and easy to form.

In some embodiments, the maximum distance between the third wall portion and the fourth wall portion is A, and the minimum distance between the first wall portion and the second wall portion is B, where A<B. This makes the pressure relief mechanism and the connection position respectively located on two more distant wall portions (the first wall portion and the second wall portion), thereby further reducing the impact of the connection position on the pressure relief mechanism. In addition, due to A<B, when the electrode assembly expands, the first and second wall portions are less affected by the electrode assembly than the third and fourth wall portions. Due to the pressure relief mechanism being located on the first wall portion, the expansion of the electrode assembly is less likely to obstruct the pressure relief mechanism, thereby reducing the risk of electrode assembly expanding to obstruct the pressure relief mechanism and causes the pressure relief mechanism to fail to release pressure normally. Due to the connection position being located on the second wall portion, the risk of damage to the case at the connection position due to electrode assembly expansion is reduced.

In some embodiments, the multiple wall portions include a first wall portion, and the pressure relief mechanism and the case are arranged separately, with the pressure relief mechanism installed on the first wall portion. The pressure relief mechanism is an independent component of the case, and the pressure relief mechanism and the case can be produced separately and then assembled, resulting in high production efficiency.

In some embodiments, the multiple wall portions include a first wall portion, and the pressure relief mechanism is integrally formed with the first wall portion. In this way, the reliability of the pressure relief mechanism is higher, eliminating the connection process between the pressure relief mechanism and the first wall portion, which can reduce the production cost of the case.

In some embodiments, the first wall portion is provided with a notching groove, and the first wall portion forms a pressure relief mechanism corresponding to the area where the notching groove is provided. The integrated pressure relief mechanism is formed by setting notching grooves on the first wall portion, which has a simple forming method and low production cost.

In some embodiments, the first wall portion has a first inner surface facing the interior of the case, and a notching groove is provided on the first inner surface. On the one hand, when forming a notching groove on the first inner surface of the first wall portion, it is not easy to affect the outer surface of the first wall portion, so that the outer surface of the first wall portion remains flat. On the other hand, the notching groove is set on the first inner surface of the first wall portion, and the groove wall surface of the notching groove is not exposed to the outside of the battery cell, thereby reducing the risk of oxidation of the first wall portion in the area where the notching groove is set and improving the stability of the integrated pressure relief mechanism.

In some embodiments, the first wall portion has a first outer surface facing away from the interior of the case, and a notching groove is provided on the first outer surface. In this way, when forming a notching groove on the first outer surface of the first wall portion, it is not easy to affect the inner surface of the first wall portion, so that the inner surface of the first wall portion remains flat.

In some embodiments, the first wall portion has a first inner surface facing the interior of the case and a first outer surface facing away from the interior of the case, wherein both the first inner surface and the first outer surface are provided with notching grooves.

In some embodiments, the notching groove provided on the first outer surface is opposite to the notching groove provided on the first inner surface. In this way, when the thickness of the first wall portion and the thickness of the pressure relief mechanism are constant, the processing depth of the notching grooves on the first inner surface and the first outer surface is smaller, thereby reducing the forming force on the first wall portion during the formation of the notching grooves and reducing the risk of cracking on the first wall portion.

In some embodiments, the first wall portion is provided with a protrusion protruding from the first inner surface at the edge position of the notching groove. The protrusion protruding from the first inner surface strengthens the area where the notching groove is set on the first wall portion, thereby enhancing the pressure relief mechanism, improving the fatigue resistance of the pressure relief mechanism, and reducing the risk of damage to the first wall portion of the battery cell due to fatigue of the pressure relief mechanism under normal use conditions.

In some embodiments, the first wall portion is provided with a protrusion protruding from the first outer surface at the edge position of the notching groove. The protrusion protruding from the first outer surface strengthens the area where the notching groove is set on the first wall portion, thereby enhancing the pressure relief mechanism, improving the fatigue resistance of the pressure relief mechanism, and reducing the risk of damage to the first wall portion of the battery cell due to fatigue of the pressure relief mechanism under normal use conditions.

In some embodiments, along the thickness direction of the first wall portion, the thickness of the first wall portion is D, and the residual thickness of the area where the notching groove is set on the first wall portion is H₁, where H₁/D ≤ 0.7. When H₁/D>0.7, the detonation pressure of the battery cell is too high, making it more difficult for the pressure relief mechanism to be damaged when the battery cell is in thermal runaway, which can lead to delayed pressure relief. Therefore, H₁/D ≤ 0.7 can effectively improve the timeliness of battery cell releasing pressure and reduce the risk of explosion due to battery cell thermal runaway.

In some embodiments, H₁ ≥ 0.05mm. When H₁<0.5mm, under normal use conditions of the battery cell, the first wall portion in the area where the notching groove is set (pressure relief mechanism) is too thin and has excessive stress. The pressure relief mechanism is prone to fatigue and creep, which can shorten its service life and cause premature damage to the pressure relief mechanism, affecting the service life of the battery cell. Therefore, H₁ ≥ 0.05mm reduces the risk of damage to the pressure relief mechanism under normal use conditions of the battery cell and improves the service life of the battery cell.

In some embodiments, D ≤ 0.6mm. This makes the first wall portion thinner, so that when the shape and dimension of the case are fixed, the internal space of the case can be increased, which is beneficial for improving the energy density of the battery cell.

In some embodiments, the notching groove includes a first groove segment and a second groove segment, with the first groove segment intersecting with the second groove segment. The stress is more concentrated at the intersection position of the first groove segment and the second groove segment, thereby making it easier for the case to be damaged at the intersection position of the first groove segment and the second groove segment, improving the pressure relief sensitivity of the case, and timely releasing pressure when the internal pressure of the battery cell reaches the detonation pressure. When the detonation pressure of the battery cell is constant, the depth of the notching groove can be appropriately reduced to increase the residual thickness of the case in the area where the notching groove is set, thereby improving the fatigue strength of the case in the area where the notching groove is set.

In some embodiments, the notching groove further comprises a third groove segment, the first groove segment is arranged opposite to the third groove segment, and the third groove segment intersects with the second groove segment. In this way, the case has a larger pressure relief area after cracking along the first, second, and third groove segments, thereby achieving a large-scale pressure relief. In addition, the intersection position of the third groove segment and the second groove segment is more concentrated, and the case is more easily damaged at the intersection position of the second groove segment and the third groove segment, which improves the pressure relief sensitivity of the case and timely releases pressure when the internal pressure of the battery cell reaches the detonation pressure. Similarly, when the detonation pressure of the battery cell is constant, the depth of the notching groove can be appropriately reduced to increase the residual thickness of the case in the area where the notching groove is set, thereby improving the fatigue strength of the case in the area where the notching groove is set.

In some embodiments, the first groove segment, the second groove segment, and the third groove segment are sequentially connected. The notching groove of this structure is simple and easy to form.

In some embodiments, the intersection of the first groove segment and the second groove segment is at a first position, wherein the first position deviates from the two ends of the first groove segment in the extension direction; and the intersection of the third groove segment and the second groove segment is at a second position, wherein the second position deviates from the two ends of the third groove segment in the extension direction. The area on both sides of the second groove segment of the case can be opened after the case splits along the first, second, and third groove segments, which can effectively improve the pressure relief efficiency of the case.

In some embodiments, the first position is located at the midpoint of the first groove segment in the extension direction, and the second position is located at the midpoint of the third groove segment in the extension direction. In this way, the case is more easily damaged in the first and second positions, improving the pressure relief sensitivity of the case and enhancing the timeliness of pressure relief.

In some embodiments, the notching groove is a groove that extends along a non-closed trajectory.

In some embodiments, the notching groove is an arc-shaped groove. The arc-shaped groove is simple in structure and easy to form. During the pressure relief process, the case can quickly crack along the arc-shaped groove, allowing the area defined by the arc-shaped groove to quickly open.

In some embodiments, the notching groove is a groove that extends along a closed trajectory. During the pressure relief process, the case can crack along the notching groove, allowing the area defined by the notching groove to open in a detached manner, increasing the pressure relief area of the case and improving the pressure relief rate of the case.

In some embodiments, the notching groove is an annular groove. The annular groove is simple in structure and easy to form. During the pressure relief process, the case can quickly crack along the annular groove, allowing the area defined by the annular groove to quickly open.

In some embodiments, the openings at both ends of the case are arranged opposite to each other along the first direction, and the multiple wall portions include a first wall portion, wherein the first wall portion is provided with multiple pressure relief mechanisms, which are arranged along the first direction. In this way, in the event of thermal runaway of the battery cell, multiple pressure relief mechanisms on the first wall portion can be used to release pressure, improving the timeliness of pressure relief and enhancing the reliability of the battery cell. When a part of the pressure relief mechanism s on the first wall portion are obstructed or fails, the pressure can be released through another part of the pressure relief mechanisms on the first wall portion to improve the reliability of the battery cell.

In some embodiments, two pressure relief mechanisms are provided on the first wall portion. The case has a good pressure relief capability, and the production cost of the case is reduced.

In some embodiments, the two pressure relief mechanisms are respectively the first pressure relief mechanism and the second pressure relief mechanism; along the first direction, the case has opposite first open end and second open end, wherein the first pressure relief mechanism is closer to the first open end than the second pressure relief mechanism; the distance betwe en the first pressure relief mechanism and the second pressure relief mechanism is K₁; the distance between the first pressure relief mechanism and the first open end is K₂; and the distance between the second pressure relief mechanism and the second open end is K₃, where K₂<K₁, K₃<K₁. When a battery cell is in thermal runaway, the emissions inside the battery cell are more likely to accumulate in the areas near the two ends of the case. Due to K₂<K₁, and K₃<K₁, the first pressure relief mechanism is located near the first open end, and the second pressure relief mechanism is located near the second open end, making it easier for the emissions inside the battery cell to be discharged through the first and second pressure relief mechanisms, thereby improving the timeliness of pressure relief.

In some embodiments, the end faces of the front and rear ends of the plate material are connected to each other. On the one hand, there is no overlapping part between the two ends of the plate material after connection, which saves materials and reduces production costs. On the other hand, the end faces at both ends of the case are connected to each other, making the case flatter and increasing the internal space of the case, which is beneficial for improving the energy density of the battery cell.

In some embodiments, the two ends are welded together. In this way, the two ends have good connection strength, and the connection between the two ends is more secure.

In some embodiments, the case comprises multiple wall portions forming an accommodating space, wherein the connection position between the two ends is located on one wall portion. In this way, it can reduce the difficulty of connecting the two ends and improve the connection strength of the connection position.

In some embodiments, the wall thickness of the case is L, where L ≤ 0.6mm. In this way, the case formed by bending the plate material is a thin-walled case, which is conducive to achieving lightweight of the battery cell. With a certain shape and size of the case, the thin-walled case has a larger internal space, which can provide a larger accommodation space for the electrode assembly and improve the energy density of the battery cell.

In some embodiments, the case is a cuboid case. This is suitable for cuboid battery cells, which is capable of meeting the high capacity requirements of battery cells.

In some embodiments, the openings at both ends of the case are arranged opposite to each other along the length direction of the case, wherein the case has a length of a, a width of b, and a height of c, where b ≤ c ≤ a/1.5. The case is elongated, which is beneficial for improving the energy density of the battery cell.

In some embodiments, the openings at both ends of the case are arranged opposite to each other along the length direction of the case, and the length of the case is a, where a ≥ 150mm. The longer length of the case is beneficial for improving the energy density of the battery cell.

In some embodiments, a ≥ 300mm. This further enhances the energy density of battery cells.

In some embodiments, the material of the case includes aluminum alloy. Aluminum alloy cases are lightweight, have good ductility, and are easy to form.

In the second aspect, the embodiments of the present disclosure provide a battery cell comprising an electrode assembly, an end cover, and a case provided by any one of the embodiments of the first aspect, wherein the electrode assembly is accommodated in the accommodating space; and the end covers correspond one-to-one with the openings, and the end cover closes the opening.

In some embodiments, the case comprises a first wall portion provided with a pressure relief mechanism; and the battery cell also includes a support member, wherein the support member is disposed between the first wall portion and the electrode assembly, and is configured to support the electrode assembly. The support member can bear the weight of the electrode assembly and separate the first wall portion from the electrode assembly, thereby reducing the impact of the electrode assembly on the pressure relief mechanism and improving its lifespan.

In some embodiments, an avoidance groove is provided on the side of the support member facing the first wall portion, and the projection of the pressure relief mechanism is located within the avoidance groove along the thickness direction of the first wall portion. This reduces the risk of support member directly acting on the pressure relief mechanism and improves the service life of the pressure relief mechanism.

In some embodiments, an avoidance groove is provided on the side of the support member facing the first wall portion; the first wall portion has a first inner surface facing the electrode assembly, and the first inner surface is provided with a notching groove; the first wall portion forms a pressure relief mechanism corresponding to the area where the notching groove is provided; and the first wall portion is provided with a protrusion at the edge position of the notching groove that protrudes from the first inner surface, wherein the avoidance groove is configured to accommodate at least a portion of the protrusion. In this way, the first wall portion and support member are made more compact, thereby freeing up more space for the electrode assembly to improve the energy density of the battery cell.

In some embodiments, the height of the protrusion along the thickness direction of the first wall portion is H₂, and the depth of the avoidance groove is H₃, with H₂≤H₃. This ensures that the protrusion can be fully accommodated in the avoidance groove. On the one hand, it increases the contact area between the support member and the first wall portion, and improves the stability of the support member inside the case. On the other hand, the protrusion will not be subjected to the force from the support member, thereby reducing the risk of the support member applying force to the protrusion and causing a decrease in the lifespan of the pressure relief mechanism.

In the third aspect, the embodiment of the present disclosure provides an battery, including the battery cell provided by any one of the embodiments of the second aspect.

In the fourth aspect, the embodiments of the present disclosure provide a powered device comprising a battery cell provided in any one of the embodiments of the second aspect, wherein the battery cell is configured to provide electrical energy.

### Brief Description of Drawings

In order to more clearly illustrate technical solutions of embodiments of the present disclosure, drawings required for use in the embodiments will be described briefly below. It should be understood that the following drawings are merely illustrative of some embodiments of the present disclosure, which therefore should not be understood as a limitation to the scope. For those of ordinary skill in the art, other related drawings can also be obtained according to these drawings without any inventive effort.
FIG. 1 is a schematic view of the structure of the vehicle provided in some embodiments of the present disclosure;
FIG. 2 is an exploded view of the battery provided in some embodiments of the present disclosure;
FIG. 3 is an assemble view of the battery cell provided in some embodiments of the present disclosure;
FIG. 4 is an exploded view of the battery cell shown in FIG. 3;
FIG. 5 is a partially sectional view of the battery cell shown in FIG. 3;
FIG. 6 is a structural schematic view of the case provided in some embodiments of the present disclosure;
FIG. 7 is a structural schematic view of the case before being formed provided in some embodiments of the present disclosure;
FIG. 8 is a structural schematic view of the case provided in some other embodiments of the present disclosure;
FIG. 9 is a sectional view of the case shown in FIG. 8;
FIG. 10 is a partially enlarged view of the C position of the case shown in FIG. 9;
FIG. 11 is a sectional view of the case provided in some other embodiments of the present disclosure;
FIG. 12 is a partially enlarged view of the F position of the case shown in FIG. 11;
FIG. 13 is a sectional view of the case provided in some other embodiments of the present disclosure;
FIG. 14 is a partially enlarged view of the I position of the case shown in FIG. 13;
FIG. 15 is a partially enlarged view of the case provided in some embodiments of the present disclosure;
FIG. 16 is a partially enlarged view of the case provided in some other embodiments of the present disclosure;
FIG. 17 is a partially enlarged view of the case provided in some other embodiments of the present disclosure;
FIG. 18 is a partially enlarged view of a case (with a protrusion on the first inner surface) provided in some embodiments of the present disclosure;
FIG. 19 is a partially enlarged view of the case (with protrusions on both the first inner surface and the first outer surface) provided in some embodiments of the present disclosure;
FIG. 20 is a partially enlarged view of a case (with a protrusion on the first outer surface) provided in some embodiments of the present disclosure;
FIG. 21 is a schematic view of the structure of the first wall portion (with V-shaped pressure relief groove) provided in some embodiments of the present disclosure;
FIG. 22 is a schematic view of the structure of the first wall portion (with U-shaped pressure relief groove) provided in some embodiments of the present disclosure;
FIG. 23 is a schematic view of the structure of the first wall portion (with H-shaped pressure relief groove) provided in some embodiments of the present disclosure;
FIG. 24 is a schematic view of the structure of the first wall portion (with a arc-shaped pressure relief groove) provided in some embodiments of the present disclosure;
FIG. 25 is a schematic view of the structure of the first wall portion (the pressure relief groove is an annular groove) provided in some embodiments of the present disclosure;
FIG. 26 is a schematic view of the structure of the first wall portion (the pressure relief groove is an annular groove) provided in some other embodiments of the present disclosure;
FIG. 27 is a structural schematic view of the case provided in some other embodiments of the present disclosure;
FIG. 28 is a sectional view of the case in M direction shown in FIG. 27;
FIG. 29 is a partially enlarged view of the N position of the case shown in FIG. 27;
FIG. 30 is a structural schematic view of the case provided in some other embodiments of the present disclosure;
FIG. 31 is a front view of the battery cell provided in some embodiments of the present disclosure;
FIG. 32 is a p-p sectional view of the battery cell shown in FIG. 31;
FIG. 33 is a partially enlarged view of the Q part of the battery cell shown in FIG. 32;
FIG. 34 is a partially enlarged view of the S part of the battery cell shown in FIG. 33; and
FIG. 35 is a partially enlarged view of the battery cell provided in some other embodiments of the present disclosure.

Reference signs: 1-shell; 11-case; 111-accommodating space; 112-end; 1121-first end face; 1122-second end face; 113-wall portion; 1131-first wall portion; 11311-pressure relief hole; 11312-first inner surface; 11313-first outer surface; 1132-second wall portion; 11321-first connecting wall; 11322- second connecting wall; 11323-first surface; 11324-second surface; 11325-first connecting part; 11326-second connecting part; 11327-third connecting part; 1133-third wall portion; 1134-fourth wall portion; 114-connection position; 115-first open end; 116-second open end; 12-end cover; 13-pressure relief mechanism; 131-first pressure relief mechanism; 132-second pressure relief mechanism; 14-notching groove; 141-first groove segment; 142-second groove segment; 143-third groove segment; 144-pressure relief area; 1411-reinforcing rib; 145-first position; 155-second position; 15-protrusion; 151-second inner surface; 2-electrode assembly; 21-tab; 3-electrode terminal; 4-first insulating member; 5-second insulating member; 6-support member; 61-avoidance groove; 10-battery cell; 20-box; 201-first part; 202-second part; 100-battery; 200-controller; 300-motor; 1000-vehicle; X-first direction; Y-second direction; Z-third direction.

### Detailed Description of Embodiments

In order to make the objectives, technical solutions and advantages of the embodiments of the present disclosure clearer, the technical solutions in the embodiments of the present disclosure will be described clearly below with reference to the drawings in the embodiments of the present disclosure. Obviously, the embodiments described are some of, rather than all of, the embodiments of the present disclosure. All the other embodiments obtained by those of ordinary skill in the art based on the embodiments of the present disclosure without any creative effort shall fall within the scope of protection of the present disclosure.

Unless otherwise defined, all technical and scientific terms used in the present disclosure have the same meanings as those commonly understood by those skilled in the art to which the present disclosure belongs. The terms used in the description of the present disclosure are merely for the purpose of describing specific embodiments, but are not intended to limit the present disclosure. The terms "comprise/include", "provide", and any variations thereof in the description and claims, as well as the brief description of the drawings described above of the present disclosure are intended to cover non-exclusive inclusions. The terms "first", "second", etc. in the description and the claims of the present disclosure or the drawings are used to distinguish different objects, rather than describing specific sequences or primary and secondary relationships.

In the present disclosure, the phrase "embodiment" mentioned means that the specific features, structures, or characteristics described with reference to the embodiments may be encompassed in at least one embodiment of the present disclosure. The phrase at various locations in the description does not necessarily refer to the same embodiment, or an independent or alternative embodiment exclusive of another embodiment.

In the description of the present disclosure, it should be noted that unless otherwise explicitly specified and defined, the terms "install", "link", "connect" and "attach" should be understood in a broad sense, for example, it may be a fixed connection, a detachable connection, or an integrated connection; and may be a direct connection, an indirect connection by means of an intermediate medium, or internal communication between two elements. For those of ordinary skill in the art, the specific meaning of the foregoing terms in the present disclosure may be understood according to specific circumstances.

The term "and/or" in the present disclosure is only a description for the association relationship of the associated object, indicating that there can be three types of relationships. For example, A and/or B can indicate three conditions: the presence of only A, the presence of both A and B, and the presence of only B. In addition, the character "/" in the present disclosure generally indicates that the associated objects before and after have an "or" relationship.

In the embodiments of the present disclosure, the same reference signs represent the same components, and for simplicity, detailed descriptions for the same components are omitted in different embodiments. It should be understood that the thickness, length, width, and other dimensions of various components in the embodiments of the present disclosure shown in the drawings, as well as the overall thickness, length, width, and other dimensions of the integrated device, are only illustrative examples and should not constitute any limitations to the present disclosure.

The term "multiple (a plurality of)" in the present disclosure refers to two or more (including two).

In the embodiments of the present disclosure, the battery cell can be a secondary battery, which refers to a battery cell with the active material that can be activated and continue to be used by charging after the discharge of the battery cell.

The battery cells can be lithium ion batteries, sodium ion batteries, sodium lithium ion batteries, lithium metal batteries, sodium metal batteries, lithium sulfur batteries, magnesium ion batteries, nickel hydrogen batteries, nickel cadmium batteries, lead accumulator, etc., and this is not limited by the embodiments of the present disclosure.

The battery cell generally includes an electrode assembly. The electrode assembly includes a positive electrode, a negative electrode, and a separator. During the charging and discharging process of battery cell, active ions (such as lithium ions) are inserted and removed back and forth between the positive and negative electrodes. The separator is set between the positive and negative electrodes, which can prevent short circuits between the positive and negative electrodes and allow active ions to pass through.

In some embodiments, the positive electrode can be a positive electrode plate, which may include a positive electrode current collector and a positive electrode active material set on at least one surface of the positive electrode current collector.

As an example, the positive electrode current collector has two surfaces opposite in its own thickness direction, and the positive electrode active material is set on either or both surfaces opposite to each other of the positive electrode current collector.

As an example, the positive electrode current collector can be metal foil or composite current collectors. For example, as a metal foil, silver surface treated aluminum or stainless steel, stainless steel, copper, aluminum, nickel, carbon precision electrodes, carbon, nickel, or titanium can be used. The composite current collector can include a polymer material base layer and a metal layer. Composite current collector can be formed by forming metal materials (aluminum, aluminum alloys, nickel, nickel alloys, titanium, titanium alloys, silver and silver alloys, etc.) onto polymer material substrates (such as polypropylene, polyethylene terephthalate, polybutylene terephthalate, polystyrene, polyethylene, etc.).

As an example, the positive electrode active material may include at least one of the following materials: lithium-containing phosphate, lithium transition metal oxide, and their respective modified compounds. But the present disclosure is not limited to these materials, and other traditional materials that can be used as positive electrode active materials for batteries can also be used. These positive electrode active materials can be used alone or in combination with two or more. Examples of lithium-containing phosphates may include but are not limited to at least one of lithium iron phosphate (such as LiFePO4 (also referred to as LFP), composite materials of lithium iron phosphate and carbon, lithium manganese phosphate (such as LiMnPO4), composite materials of lithium manganese phosphate and carbon, lithium manganese iron phosphate, and composite materials of lithium manganese iron phosphate and carbon. Examples of lithium transition metal oxides may include but are not limited to at least one of lithium cobalt oxide (such as LiCoO₂), lithium nickel oxide (such as LiNiO₂), lithium manganese oxide (such as LiMnO₂, LiMn2O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁), lithium nickel cobalt aluminum oxide (such as LiNi_{0.85}Co_{0.15}Al_{0.05}O₂), and their modified compounds.

In some embodiments, the positive electrode can be made of foam metal. Foam metal can be foam nickel, foam copper, foam aluminum, foam alloy, or foam carbon. When the foam metal is used as the positive electrode, the positive electrode active material may not be set on the surface of the foam metal, but it can also be set. As an example, the foam metal can also be filled or/and deposited with lithium source material, potassium metal or sodium metal, and the lithium source material is lithium metal and/or lithium rich material.

In some embodiments, the negative electrode may be a negative electrode plate, which may include a negative electrode current collector.

As an example, the negative electrode current collector can be metal foil, foam metal or composite current collectors. For example, as a metal foil, silver surface treated aluminum or stainless steel, stainless steel, copper, aluminum, nickel, carbon precision electrodes, carbon, nickel, or titanium can be used. Foam metal can be foam nickel, foam copper, foam aluminum, foam alloy, or foam carbon. The composite current collector can include a polymer material base layer and a metal layer. Composite current collector can be formed by forming metal materials (copper, copper alloys, nickel, nickel alloys, titanium, titanium alloys, silver and silver alloys, etc.) onto polymer material substrates (such as polypropylene, polyethylene terephthalate, polybutylene terephthalate, polystyrene, polyethylene, etc.).

As an example, the negative electrode plate may include a negative electrode current collector and a negative electrode active material set on at least one surface of the negative electrode current collector.

As an example, the negative electrode current collector has two surfaces opposite in its own thickness direction, and the negative electrode active material is set on either or both surfaces opposite to each other of the negative electrode current collector.

As an example, the negative electrode active material can use a negative electrode active material commonly known in the art for battery cells. As an example, negative electrode active materials may include at least one of the following materials: artificial graphite, natural graphite, soft carbon, hard carbon, silicon-based materials, tin-based materials, and lithium titanate. Silicon-based materials can be selected from at least one of elemental silicon, silicon oxide compounds, silicon carbon composites, silicon nitrogen composites, and silicon alloys. Tin-based materials can be selected from at least one of elemental tin, tin oxide compounds, and tin alloys. But the present disclosure is not limited to these materials, and other traditional materials that can be used as negative electrode active materials for batteries can also be used. These negative electrode active materials can be used alone or in combination with two or more.

In some embodiments, the positive electrode current collector may be made of aluminum, and the negative electrode current collector may be made of copper.

In some embodiments, electrode assembly also includes an separator, which is set between the positive and negative electrodes.

In some embodiments, the separator is an isolation membrane. There are no special restrictions on the types of isolation membranes in the present disclosure, and any well-known porous-structure isolation membrane with good chemical and mechanical stability can be selected.

As an example, the main materials of the isolation membrane can be selected from at least one of glass fiber, nonwoven fabric, polyethylene, polypropylene, polyvinylidene fluoride and ceramics. The isolation membrane can be a single-layer thin film or a multi-layer composite thin film without any special restrictions. When the isolation membrane is a multi-layer composite thin film, the materials of each layer can be the same or different without special limitations. The separator can be a separate component located between the positive and negative electrodes, or it can be attached to the surface of the positive and negative electrodes.

In some embodiments, the separator is a solid electrolyte. The solid electrolyte is located between the positive and negative electrodes, serving both to transport ions and isolate the positive and negative electrodes.

In some embodiments, the battery cell also includes an electrolyte, which plays a role in conducting ions between the positive and negative electrodes. The present disclosure does not have specific restrictions on the types of electrolytes and can be selected according to needs. The electrolyte can be liquid, gelled or solid.

The liquid electrolytes include electrolyte salts and solvents.

In some embodiments, the electrolyte salt may be selected from at least one of lithium hexafluorophosphate, lithium tetrafluoroborate, lithium perchlorate, lithium hexafluoroarsenate, lithium bis(fluorosulfonimide), lithium bis(trifluoromethane)sulfonimide, lithium triflate, lithium difluorophosphate, lithium difluoro(oxalato)borate, lithium bis(oxalato)borate, lithium difluoro bis(oxalato)phosphate and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and ethyl sulfonyl ethane. Ether solvents can also be used as solvents. Ether solvents can include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ethers.

The gelled electrolyte includes the framework network with polymer as the electrolyte, with ionic liquid-lithium salt.

The solid electrolytes include polymer solid electrolytes, inorganic solid electrolytes, and composite solid electrolytes.

As an example, polymer solid electrolytes can be polyether (polyethylene oxide), polysiloxane, polycarbonate, polyacrylonitrile, polyvinylidene fluoride, polymethyl methacrylate, monoionic polymers, polyionic liquid-lithium salt, cellulose, etc.

As an example, inorganic solid electrolytes can be one or more of oxide solid electrolytes (crystalline perovskite, sodium superconducting ion conductor, garnet, amorphous LiPON film), sulfide solid electrolytes (crystalline lithium superionic conductor (lithium germanium phosphorus sulfur, sulfur silver germanite), amorphous sulfides), halide solid electrolytes, nitride solid electrolytes, and hydride solid electrolytes.

As an example, composite solid electrolytes are formed by adding inorganic solid electrolyte fillers to polymer solid electrolytes.

In some embodiments, electrode assembly is of a wound structure. The positive and negative electrode plates are wound into a winding structure.

In some embodiments, electrode assembly is of a stacked structure.

As an example, multiple positive and negative electrode plates can be set separately, and multiple positive and negative electrode plates can be alternately stacked.

As an example, multiple positive electrode plates can be arranged, and the negative electrode plate can be folded to form multiple stacked folding sections. One positive electrode plate can be clamped between adjacent folding sections.

As an example, both the positive and negative electrode plates are folded to form multiple stacked folding sections.

As an example, multiple separators can be set between any adjacent positive or negative electrode plates.

As an example, the separator can be continuously set between any adjacent positive or negative electrode plates by folding or winding.

In some embodiments, the shape of electrode assembly may be cylindrical, flat, or in a shape of polygon prism.

In some embodiments, electrode assembly is equipped with an tab, which can lead current out from electrode assembly. The tab includes the positive tab and the negative tab.

In some embodiments, the battery cell may include a shell. The shell is used to pack the electrode assembly, electrolyte and other components. Shell can be a steel shell, aluminum shell, plastic shell (such as polypropylene), composite metal shell (such as copper aluminum composite shell), or aluminum-plastic film.

As an example, the battery cell can be a cylindrical battery cell, a prismatic battery cell, a soft pack battery cell, or other shaped battery cell. The prismatic battery cell includes a square shell battery cell, a blade-shaped battery cell, a polygon prism battery, for example, a hexagonal prismatic battery, etc. There are no special limitations in the present disclosure.

The battery mentioned in the embodiments of the present disclosure refers to a single physical module that includes one or more battery cells to provide higher voltage and capacity.

In some embodiments, the battery can be a battery module, and when there are multiple battery cells, multiple battery cells are arranged and fixed to form one battery module.

In some embodiments, the battery can be a battery pack, which includes a box and a battery cell, and the battery cell or battery module is accommodated in the box.

In some embodiments, the box can serve as a part of the chassis structure of the vehicle. For example, the part of the box can become at least a part of the floor of the vehicle, or the part of the box can become at least a part of the crossbeam and longitudinal beam of the vehicle.

In some embodiments, the battery may serve as an energy storage device. Energy storage devices include energy storage containers, energy storage electrical cabinets, etc.

In a battery cell, the shell may include a case and an end cover, with the case having an opening and the end cover closing the opening of the case. The case is an important component of the battery cell, and its difficulty in forming directly affects the production cost of the battery cell.

The case is generally formed by stamping or stretching the base material. During the forming process, the base material is subjected to a large force, which can easily cause damage. The difficulty of forming the case is high, and the yield of finished products is low. Especially when it is necessary to thin the case to improve the energy density of battery cells, it is more difficult to form thin-walled case through stamping or stretching, thereby making it difficult to form thin-walled case.

In view of this, the embodiments of the present disclosure provide a case, wherein the case is formed by bending a plate material, and the front and rear ends of the plate material are connected to each other to form an accommodating space having openings at two opposite ends, wherein the accommodating space is configured to accommodate the electrode assembly of the battery cell.

In such case, the case is formed by bending a plate material, and the front and rear end walls of the plate material are connected to each other, thereby forming a case with openings at two opposite ends. The forming method of the case is simple, effectively reducing the difficulty of forming the case.

The case described in the embodiments of the present disclosure is applicable to battery cells, batteries and powered device using battery cells.

The powered device can be a vehicle, a mobile phone, a portable device, a notebook computer, a ship, a spacecraft, an electric toy, an electric tool, and the like. The vehicle can be a fuel vehicle, a gas vehicle, or a new energy vehicle. The new energy vehicle can be a pure electric vehicle, a hybrid electric vehicle, a range extended vehicle, or the like. The spacecraft includes an aircraft, a rocket, a space shuttle, a spacecraft, and the like. The electric toys include a stationary or mobile electric toy, such as a game console, an electric vehicle toy, an electric ship toy, an electric airplane toy, and the like. The electric tools include a metal cutting electric tool, a grinding electric tool, an assembly electric tool, and an electric tool for railways, such as an electric drill, an electric grinder, an electric wrench, an electric screwdriver, an electric hammer, an electric impact drill, a concrete vibrator, and an electric planer. The foregoing powered device is not specially limited in the embodiment of the present disclosure.

For ease of description, the following embodiments will be described by taking a powered device being a vehicle as an example.

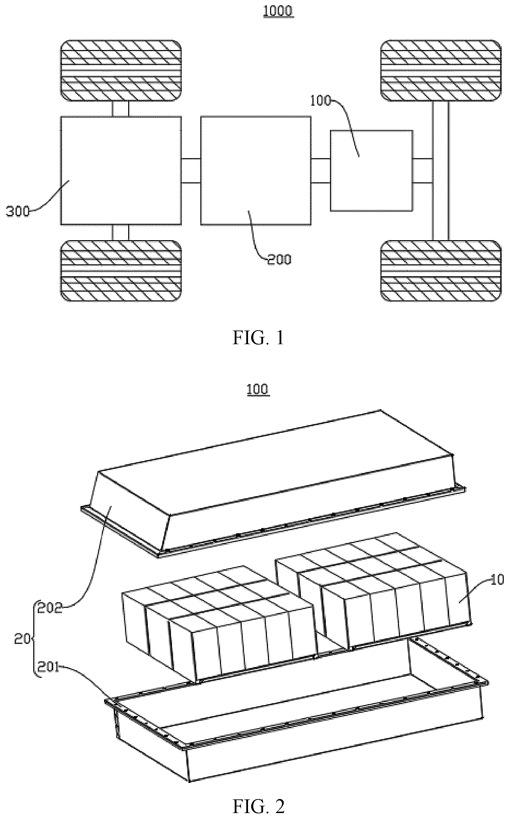

Referring to FIG. 1, FIG. 1 is a structural schematic view of the vehicle 1000 provided in some embodiments of the present disclosure. The interior of vehicle 1000 is equipped with battery 100, which can be installed at the bottom, head, or tail of vehicle 1000. Battery 100 can be used for the power supply for the vehicle 1000. For example, battery 100 can serve as the operating power supply for vehicle 1000.

The vehicle 1000 can also include a controller 200 and a motor 300, wherein the controller 200 is used to control the battery 100 to supply power to the motor 300, for example, used for the working power demand during startup, navigation, and running of the vehicle 1000.

In some embodiments of the present disclosure, the battery 100 can not only serve as the operating power source for vehicle 1000, but also as the driving power source for vehicle 1000, thereby replacing or partially replacing fuel or natural gas to provide driving power for vehicle 1000.

Referring to FIG. 2, FIG. 2 is an explosion view of the battery 100 provided in some embodiments of the present disclosure. The battery 100 can include a battery cell 10 and a box 20, which is used to accommodate the battery cell 10.

In the above, the box 20 is a component that accommodates the battery cell 10, and the box 20 provides an accommodating space for the battery cell 10. The box 20 can be of various structures. In some embodiments, the box 20 may include a first part 201 and a second part 202, with the first part 201 and the second part 202 covering each other, so as to define an accommodating space for accommodating the battery cell 10. The first part 201 and the second part 202 can be of various shapes, such as cuboid, cylinder, etc. The first part 201 can be of a hollow structure with one side opened, and the second part 202 can also be of a hollow structure with one side opened. The opened side of the second part 202 covers the opened side of the first part 201, so as to form a box 20 with accommodating space. It can also be that the first part 201 is of a hollow structure with one side opened, the second part 202 is of a plate-like structure, and the second part 202 covers the opened side of the first part 201, so as to form a box 20 with accommodating space.

In battery 100, one or multiple battery cells 10 can be provided. If multiple battery cells 10 are provided, the multiple battery cells 10 can be connected in series, parallel, or hybrid. Hybrid connection means that both series connection and parallel connection exist among multiple battery cells 10. It is possible that multiple battery cells 10 are first connected in series, parallel, or hybrid to form a battery module, and multiple battery modules are then connected in series, parallel, or hybrid to form a whole to be accommodated in the box 20. Alternatively, all battery cells 10 can be directly connected in series, parallel, or hybrid together, and then the entire body composed of all battery cells 10 can be accommodated in the box 20.

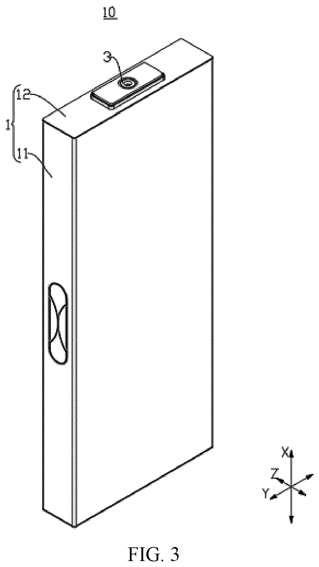

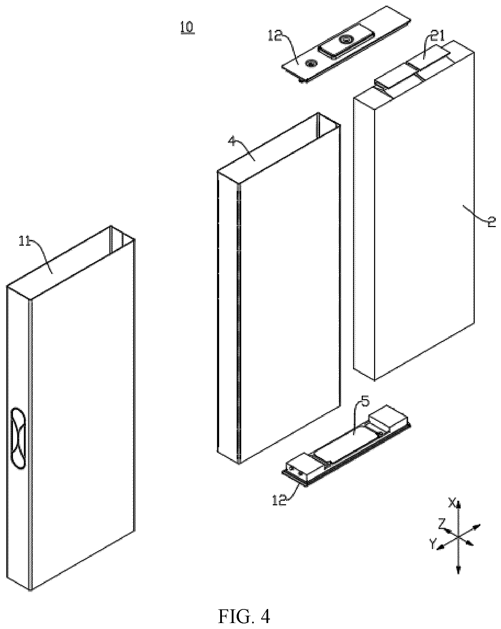

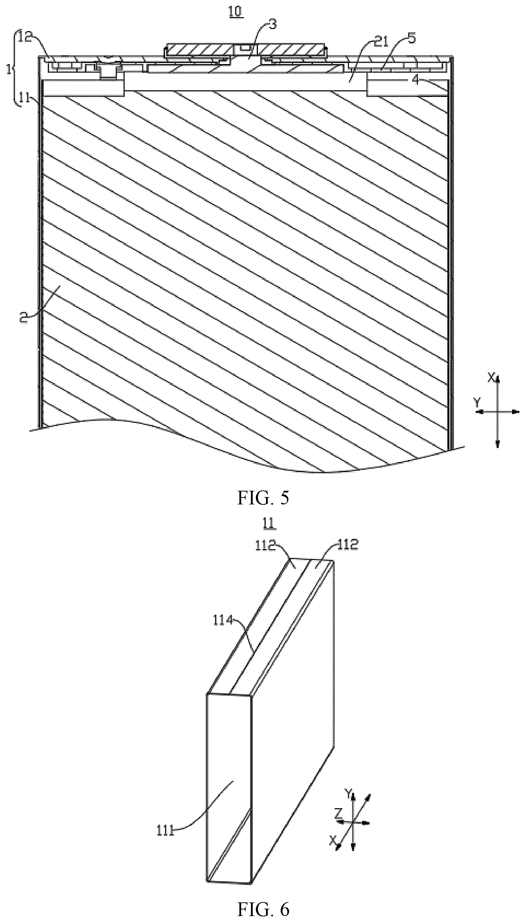

Referring to FIGS. 3-5, FIG. 3 is an assemble view of the battery cell 10 provided in some embodiments of the present disclosure; FIG. 4 is an exploded view of the battery cell 10 shown in FIG. 3; and FIG. 5 is a partially sectional view of the battery cell 10 shown in FIG. 3. The battery cell 10 may include a shell 1 and electrode assembly 2.

The shell 1 is used to accommodate the electrode assembly 2, electrolyte and other components. As an example, the shell 1 may include a case 11 and an end cover 12.

The case 11 can also be of a hollow structure with two opposite ends forming openings. The material of case 11 can be various, including metal materials such as copper, iron, aluminum, steel, aluminum alloy, etc. Case 11 can also be made of non-metallic materials such as plastic.

The end cover 12 is a component that blocks the opening of the case 11 to isolate the internal environment of the battery cell 10 from the external environment. The end cover 12 and the case 11 jointly define an accommodating space for accommodating the electrode assembly 2, the electrolyte, and other components. The end cover 12 can be connected to the case 11 by welding or rolling to close the opening of the case 11. The shape of the end cover 12 can match the shape of the shell 1. For example, the case 11 is of a cuboid structure, and the end cover 12 is of a rectangular plate-like structure matching the shell 1. For another example, the case 11 is of a cylinder structure, and the end cover 12 is of a circular plate-like structure matching the case 11. The material of end cover 12 can also be various. End cover 12 can be made of a metal material, such as copper, iron, aluminum, steel, aluminum alloy, etc. End cover 12 can also be made of a non-metal material, such as plastic. The end cover 12 and the case 11 can be made of the same material or different materials. Two end covers 12 can be provided, and the two end covers 12 each cover the two openings of the case 11. The two end covers 12 and the case 11 jointly define the accommodating space.

In some embodiments, the battery cell 10 may also include an electrode terminal 3, which is arranged on the shell 1 and is electrically connected to the tab 21 of the electrode assembly 2 to output the electrical energy of the battery cell 10. The electrode terminal 3 can be placed on the case 11 of the shell 1 or on the end cover 12 of the shell 1. The electrode terminal 3 can be directly connected to the tab 21, for example, the electrode terminal 3 can be directly welded to the tab 21. The electrode terminal 3 and the tab 21 can also be indirectly connected, for example, the electrode terminal 3 and the tab 21 are indirectly connected through a current collector component. The current collector component can be metal conductor, such as copper, iron, aluminum, steel, aluminum alloy, etc.

As an example, as shown in FIGS. 3-5, electrode terminals 3 are provided on the end covers 12 at both ends of the case 11, and tabs 21 are formed on the two opposite ends of the electrode assembly 2. The tab 21 on one end of the electrode assembly 2 is the positive tab, and the tab 21 on the other end of the electrode assembly 2 is the negative tab. The electrode terminal 3 on one end cover 12 is electrically connected to the positive tab, and the electrode terminal 3 on the other end cover 12 is electrically connected to the negative tab.

In some embodiments, referring to FIGS. 4 and 5 continuously, the battery cell 10 may further include a first insulating member 4, which is wrapped around the electrode assembly 2 and used to insulate and isolate the electrode assembly 2 from the case 11. The first insulating member 4 is made of an insulating material, such as plastic, rubber, etc.

In some embodiments, the battery cell 10 may further include a second insulating member 5, which is arranged corresponding to the end cover 12. The second insulating member 5 is arranged on the side of the end cover 12 facing the electrode assembly 2, and is used to insulate and isolate the end cover 12 and the electrode assembly 2. The second insulating member 5 is made of insulating material, such as plastic, rubber, etc.

Referring to FIG. 6, FIG. 6 is a structural schematic view of the case 11 provided in some embodiments of the present disclosure. The embodiments of the present disclosure provide a case 11 for a battery cell 10, wherein the case 11 is formed by bending a plate material, and the front and rear ends 112 of the plate material are connected to each other to form an accommodating space 111 having openings at two opposite ends, wherein the accommodating space 111 is configured to accommodate the electrode assembly 2 of the battery cell 10.

The case 11 can be of cuboid, prismoid, etc. The case 11 is formed by bending a plate material. Before the case 11 is formed, the plate material can be a rectangular plate, which can be bent to form cylindrical case, prismatic case, etc. The prismoid can be triangular prism
, quadrangular prism, pentagonal prism, hexagonal prism, etc. As an example, as shown in FIG. 6, case 11 is a cuboid case.

The accommodating space 111 is the space inside the case 11 for accommodating the electrode assembly 2. The two opposite ends of the accommodating space 111 have openings. It can be understood that the two opposite ends of the case 11 form openings, and the case 11 is of a hollow structure with openings formed at the two opposite ends. The openings at both ends of case 11 are arranged opposite to each other along the first direction X.

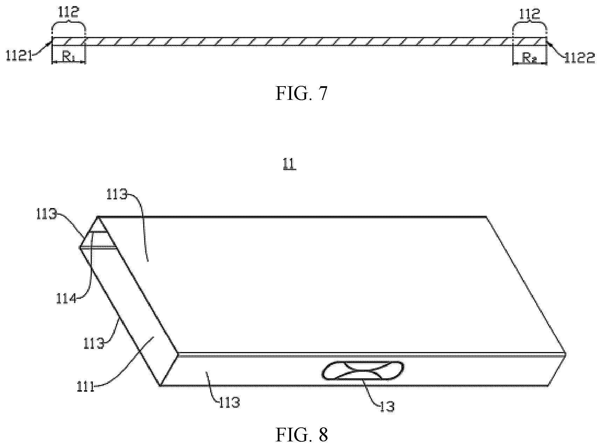

Referring to FIG. 7, FIG. 7 is a structural schematic view of the case 11 before being formed provided in some embodiments of the present disclosure. Before the formation of case 11, the plate material has two opposing end faces, namely the first end face 1121 and the second end face 1122. The portion of the plate material in an area that is offset by a first predetermined distance R₁ from the first end face 1121 in the direction close to the second end face 1122 is one end 112 of the plate material, and the length of this end 112 is equal to the first predetermined distance R₁. The part of the plate material in an area that is offset by a second predetermined distance R₂ from the second end face 1122 in the direction close to the first end face 1121 is the other end 112 of the plate material, and the length of this end 112 is equal to the second predetermined distance R₂. The first predetermined distance R₁ and the second predetermined distance R₂ can be equal or unequal.

There are various ways to connect the two ends 112 of the plate material, such as welding, bonding, hot melt connection, etc. In the embodiment where the case 11 is a prism, the connection position 114 of the two ends 112 can be located on one wall portion 113 of the case 11, or at the intersection position of the two wall portions 113, which is the corner position of the case 11.

In the embodiments of the present disclosure, the case 11 is formed by bending a plate material, and the front and rear end walls of the plate material are connected to each other, thereby forming a case 11 with openings at two opposite ends. The forming method of the case 11 is simple, effectively reducing the difficulty of forming the case 11. During the forming process, the case 11 is less susceptible to significant impact forces and less likely to cause damage, thereby improving the forming yield of the case 11.

Especially the advantages of forming thin-walled cases are more prominent, which can effectively reduce the difficulty of forming thin-walled cases and improve the forming yield of thin-walled cases.

In some embodiments, referring to FIG. 8, FIG. 8 is a structural schematic view of the case 11 provided in some other embodiments of the present disclosure. The case 11 includes multiple wall portions 113, which form the accommodating space 111. The case 11 is equipped with a pressure relief mechanism 13, and a connection position 114 of the two ends 112 and the pressure relief mechanism 13 are located on two different wall portions 113.

The wall portions 113 can be provided in a number of two, three, four, five, six, or more. If there are two wall portions 113, as an example, one wall portion 113 can be a flat and straight wall, and the other wall portion 113 can be a curved wall. The cross-section of the case 11 formed by the two wall portions 113 is a semicircle, which is perpendicular to the first direction X. If there are three wall portions 113, the case 11 can be of a triangular prism. If there are four wall portions 113, the case 11 can be of a quadrangular. If there are five wall portions 113, the case 11 can be of a pentagonal prism. If there are six wall portions 113, the case 11 can be of a hexagonal prism.

The wall portion 113 where the pressure relief mechanism 13 is located and the wall portion 113 where the connection position 114 is located can be two adjacent wall portions 113, or they can be connected by other wall portions 113 therebetween. The pressure relief mechanism 13 and the case 11 can be integrated or separated structures.

In the embodiment, the connection position 114 and the pressure relief mechanism 13 are not set on the same wall portion, which reduces the influence of the connection position 114 on the pressure relief mechanism 13, improves the reliability of the pressure relief mechanism 13, and enables the pressure relief mechanism 13 to release pressure normally in case of thermal runaway of the battery cell 10.

In other embodiments, the connection position 114 and the pressure relief mechanism 13 can also be set on the same wall portion 113.

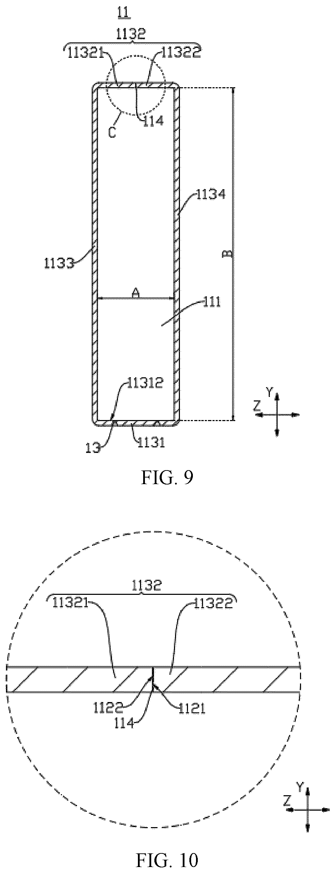

In some embodiments, referring to FIG. 9 continuously, FIG. 9 is a sectional view of the case 11 shown in FIG. 8. The multiple wall portions 113 include a first wall portion 1131 and a second wall portion 1132 that are oppositely arranged, with the pressure relief mechanism 13 located on the first wall portion 1131 and the connection position 114 located on the second wall portion 1132.

The first wall portion 1131 and the second wall portion 1132 are two opposite wall portions 113 of the case 11. This ensures that the pressure relief mechanism 13 and the connection position 114 are located on two opposite wall portions 113 respectively, and that the pressure relief mechanism 13 and the connection position 114 are further apart in the circumferential direction of the case 11, thereby further reducing the impact of the connection position 114 on the pressure relief mechanism 13.

In some embodiments, referring to FIG. 9 continuously, the second wall portion 1132 comprises a first connecting wall 11321 and a second connecting wall 11322 arranged opposite to the first wall portion 1131, and the first connecting wall 11321 and the second connecting wall 11322 respectively form the two ends 112.

The second wall portion 1132 can be divided into two parts, namely the first connecting wall 11321 and the second connecting wall 11322. The first connecting wall 11321 serves as one end 112 of the plate material, and the second connecting wall 11322 serves as the other end 112 of the plate material. By connecting the first connecting wall 11321 and the second connecting wall 11322 to each other, the connection between the front and rear ends 112 of the plate material can be achieved, with a simple structure and easy implementation of the connection between the two ends 112 of the plate material.

In some embodiments, referring to FIG. 10, FIG. 10 is a partially enlarged view of the C position of the case 11 shown in FIG. 9. The first connecting wall 11321 has a first end face 1121, and the second connecting wall 11322 has a second end face 1122, wherein the first end face 1121 and the second end face 1122 are respectively the end faces of the front and rear ends of the plate material, and the first end face 1121 is connected to the second end face 1122.

It can be understood that the first end face 1121 and the second end face 1122 are respectively the end faces of the two ends 112 of the plate material.

The connection position 114 between the two ends 112 of the plate material is formed at the junction of the first end face 1121 and the second end face 1122. The first end face 1121 and the second end face 1122 can be flat or curved surface. The curved surface can be an arc-shaped surface, a serrated surface, etc. The first end face 1121 and the second end face 1122 can be welded, bonded, hot-melt connected, etc.

As an example, the first end face 1121 is welded to the second end face 1122. During welding, welding can be performed along the weld seam formed between the first end face 1121 and the second end face 1122.

In this embodiment, the first end face 1121 of the first connecting wall 11321 is connected to the second end face 1122 of the second connecting wall 11322. On the one hand, this can reduce the length of the plate material, save materials, and lower production costs. On the other hand, it makes the second connecting wall 11322 more flat as a whole, which can increase the internal space of the case 11, and is beneficial for improving the energy density of the battery cell 10.

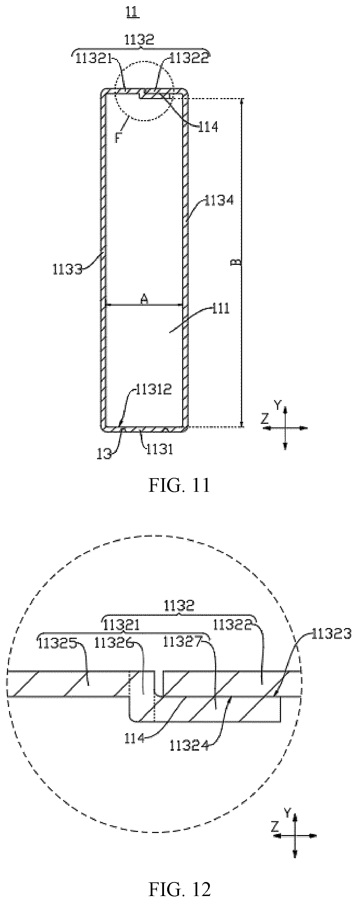

In some embodiments, referring to FIGS. 11 and 12, FIG. 11 is a sectional view of the case 11 provided in some other embodiments of the present disclosure; and FIG. 12 is a partially enlarged view of the F position of the case 11 shown in FIG. 11. Along the thickness direction of the first wall portion 1131, the first connecting wall 11321 and the second connecting wall 11322 are at least partially stacked and connected to each other.

The first wall portion 1131 and the second wall portion 1132 are arranged opposite to each other along the second direction Y, and the thickness direction of the first wall portion 1131 may be consistent with the thickness direction of the second wall portion 1132. Along the thickness direction of the first wall portion 1131, the first connecting wall 11321 and the second connecting wall 11322 can be completely stacked or partially stacked. It can be understood that along the thickness direction of the first wall portion 1131, the projection of the first connecting wall 11321 overlaps at least partially with the projection of the second connecting wall 11322.

Along the thickness direction of the first wall portion 1131, the first connecting wall 11321 has a first surface 11323 facing the second connecting wall 11322, and the second connecting wall 11322 has a second surface 11324 facing the first connecting wall 11321. The first surface 11323 is connected to the second surface 11324. The connection position between the first surface 11323 and the second surface 11324 forms a connection position 114 where the two ends 112 of the plate material are connected. The first surface 11323 and the second surface 11324 can be welded, bonded, hot-melt connected, etc. As an example, the first surface 11323 is welded to the second surface 11324.

As an example, as shown in FIGS. 11 and 12, the first connecting wall 11321 and the second connecting wall 11322 are partially stacked. The first connecting wall 11321 includes a first connecting part 11325, a second connecting part 11326, and a third connecting part 11327, which are sequentially connected to form a Z-shaped structure. The third connecting part 11327 and the second connecting wall 11322 are at least partially stacked, and the surface of the third connecting part 11327 facing the second connecting wall 11322 is the first surface 11323. As an example, the third connecting part 11327 is located on the side of the second connecting wall 11322 facing the first wall portion 1131. In other embodiments, the third connecting part 11327 may also be located on the side of the second connecting wall 11322 facing away from the first wall portion 1131.

In the embodiment, the first connecting wall 11321 and the second connecting wall 11322 are at least partially stacked and connected to each other, such that the difficulty of connecting the first connecting wall 11321 and the second connecting wall 11322 can be reduced, the connection area between the first connecting wall 11321 and the second connecting wall 11322 can be increased, and the connection strength between the first connecting wall 11321 and the second connecting wall 11322 can be improved.

In some embodiments, referring to FIGS. 9-12 continuously, the case 11 further comprises a third wall portion 1133 and a fourth wall portion 1134 arranged oppositely, with the third wall portion 1133 connecting the first wall portion 1131 and the first connecting wall 11321, and the fourth wall portion 1134 connecting the first wall portion 1131 and the second connecting wall 11322.

The third wall portion 1133 is the wall portion 113 connecting the first wall portion 1131 and the first connecting wall 11321 in the case 11, and the fourth wall portion 1134 is the wall portion 113 connecting the first wall portion 1131 and the second connecting wall 11322 in the case 11. It can be understood that in the case 11, the first connecting wall 11321, the third wall portion 1133, the first wall portion 1131, the fourth wall portion 1134, and the second connecting wall 11322 are sequentially connected.

As an example, the first wall portion 1131 and the second wall portion 1132 are arranged opposite to each other along the second direction Y, and the third wall portion 1133 and the fourth wall portion 1134 are arranged opposite to each other along the third direction Z. The first direction X, the second direction Y, and the third direction Z are perpendicular to each other.

In the embodiments shown in FIGS. 11 and 12, the first connecting part 11325 of the first connecting wall 11321 is connected to the third wall portion 1133.

In this embodiment, the case 11 formed by the first wall portion 1131, the second wall portion 1132, the third wall portion 1133, and the fourth wall portion 1134 has a generally quadrangular structure, which is simple in structure and easy to form.

In some embodiments, referring to FIGS. 9-12 continuously, the maximum distance between the third wall portion 1133 and the fourth wall portion 1134 is A, and the minimum distance between the first wall portion 1131 and the second wall portion 1132 is B, where A<B.

The minimum distance between the inner surface of the third wall portion 1133 and the inner surface of the fourth wall portion 1134 along the third direction Z is the maximum distance A between the third wall portion 1133 and the fourth wall portion 1134. As an example, the inner surface of the third wall portion 1133 is arranged parallel to the inner surface of the fourth wall portion 1134.

In the embodiment shown in FIGS. 9 and 10, along the second direction Y, the inner surface of the first connecting wall 11321 is flush with the inner surface of the second connecting wall 11322, and both the inner surfaces of the first connecting wall 11321 and the second connecting wall 11322 are parallel to the inner surface of the first wall portion 1131 (first inner surface 11312). The distance between the inner surface of the first connecting wall 11321 or the inner surface of the second connecting wall 11322 and the inner surface of the first wall portion 1131 (first inner surface 11312) is the minimum distance B between the first wall portion 1131 and the second wall portion 1132. In the embodiment shown in FIGS. 11 and 12, along the second direction Y, the inner surface of the first connecting part 11325 is flush with the inner surface of the second connecting wall 11322, and the third connecting part 11327 is located on the side of the second connecting wall 11322 facing the first wall portion 1131. The inner surface of the third connecting part 11327 is the surface of the first connecting wall 11321 closest to the first wall portion 1131, and the inner surface of the third connecting part 11327 is parallel to the inner surface of the first wall portion 1131 (first inner surface 1131). The distance between the inner surface of the third connecting part 11327 and the inner surface of the first wall portion 1131 (first inner surface 11312) is the minimum distance B between the first wall portion 1131 and the second wall portion 1132.

In this embodiment, A<B causes the pressure relief mechanism 13 and the connection position 114 to be respectively located on two more distant wall portions 113 (the first wall portion 1131 and the second wall portion 1132), thereby further reducing the impact of the connection position 114 on the pressure relief mechanism 13. In addition, due to A<B, when the electrode assembly 2 expands, the first wall portion 1131 and second wall portion 1132 are less affected by the electrode assembly 2 than the third wall portion 1133 and fourth wall portion 1134. Due to the pressure relief mechanism 13 being located on the first wall portion 1131, the expansion of the electrode assembly 2 is less likely to obstruct the pressure relief mechanism 13, thereby reducing the risk of electrode assembly 2 expanding to obstruct the pressure relief mechanism 13 and causes the pressure relief mechanism 13 to fail to release pressure normally. Due to the connection position 114 being located on the second wall portion 1132, the risk of damage to the case 11 at the connection position 114 due to electrode assembly 2 expanding is reduced.

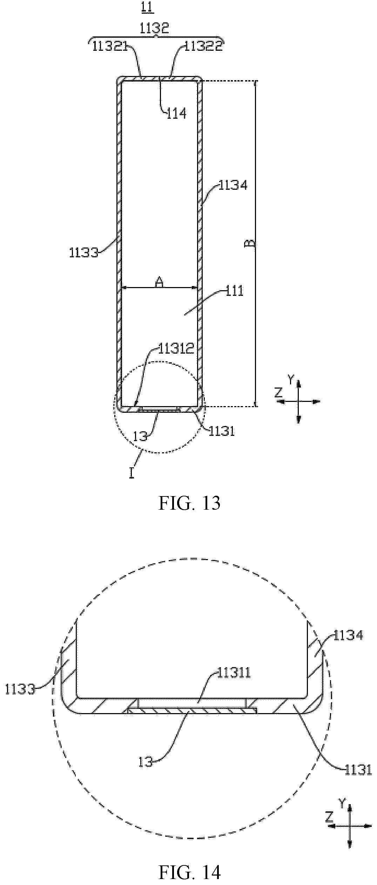

In some embodiments, referring to FIGS. 13 and 14, FIG. 13 is a sectional view of the case 11 provided in some other embodiments of the present disclosure; and FIG. 14 is a partially enlarged view of the I position of the case 11 shown in FIG. 13. The multiple wall portions 113 include a first wall portion 1131, and the pressure relief mechanism 13 and the case 11 are arranged separately, with the pressure relief mechanism 13 installed on the first wall portion 1131.

The first wall portion 1131 can be any one of the multiple wall portions 113 of the case 11, and the pressure relief mechanism 13 is located on this wall portion 113. The connection position 114 of the two ends 112 of the plate material can be located on the first wall portion 1131 or on the other wall portions 113 of the case 11. For example, as shown in FIG. 13, the connection position 114 is located at the second wall portion 1132 opposite to the first wall portion 1131.

The pressure relief mechanism 13 and the case 11 are two separate components, which are formed separately and then installed together. The pressure relief mechanism 13 can be a component such as an explosion-proof valve, and explosion-proof sheet. The pressure relief mechanism 13 can be installed on the first wall portion 1131 through bonding, welding, screwing, and other methods. The first wall portion 1131 is provided with a pressure relief hole 11311, and the pressure relief mechani sm 13 is installed at the pressure relief hole 11311. When the pressure inside the battery cell 10 reaches a preset value, the pressure relief mechanism 13 opens at least part of the pressure relief holes 11311, and the emissions inside the battery cell 10 are discharged through the pressure relief hole 11311 to release the pressure inside the battery cell 10. One or multiple pressure relief mechanisms 13 can be provided on the first wall portion 1131.

As shown in FIG. 14, taking the pressure relief mechanism 13 being the explosion-proof sheet as an example, the explosion-proof sheet is a sheet body with a strength lower than that of the first wall portion 1131 in at least some areas. The explosion-proof sheet covers the pressure relief holes 11311 and is welded to the first wall portion 1131. When the internal pressure of battery cell 10 reaches the threshold, the explosion-proof sheet is damaged, and at least part of the pressure relief holes 11311 are opened to release the pressure inside battery cell 10.

In the embodiment, the pressure relief mechanism 13 is an independent component of the case 11, and the pressure relief mechanism 13 and the case 11 can be produced separately and then assembled, resulting in high production efficiency.

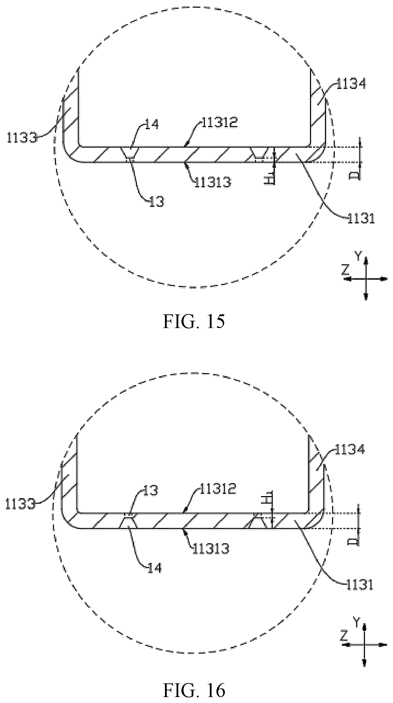

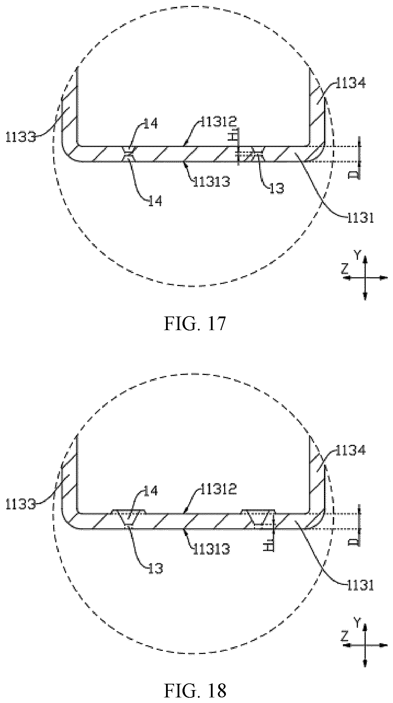

In some embodiments, referring to FIGS. 15-17, FIG. 15 is a partially enlarged view of the case 11 provided in some embodiments of the present disclosure, FIG. 16 is a partially enlarged view of the case 11 provided in some other embodiments of the present disclosure; and FIG. 17 is a partially enlarged view of the case 11 provided in some other embodiments of the present disclosure. The multiple wall portions 113 include a first wall portion 1131, and the pressure relief mechanism 13 is integrally formed with the first wall portion 1131.

The first wall portion 1131 can be any one of the multiple wall portions 113 of the case 11, and the pressure relief mechanism 13 is located on this wall portion 113. The connection position 114 of the two ends 112 of the plate material can be located on the first wall portion 1131 or on the other wall portions 113 of the case 11. For example, as shown in FIG. 13, the connection position 114 is located at the second wall portion 1132 opposite to the first wall portion 1131.

The integrated pressure relief mechanism 13 can be formed by weakening the local area of the wall portion 113. For example, annealing treatment is performed on a local area of the first wall portion 1131, so that the strength of this area is lower than that of other areas of the first wall portion 1131. The area where the first wall portion 1131 is subjected to the annealing treatment is the pressure relief mechanism 13, thereby achieving integrated forming of the pressure relief mechanism 13 and the first wall portion 1131. For another example, by thinning the thickness of a local area of the first wall portion 1131 so that its strength is lower than that of other areas of the first wall portion 1131, the area where the first wall portion 1131 is thinned is the pressure relief mechanism 13, thereby achieving integrated forming of the pressure relief mechanism 13 and the first wall portion 1131. One or multiple pressure relief mechanisms 13 can be provided on the first wall portion 1131.

In this embodiment, the reliability of the pressure relief mechanism 13 is higher, eliminating the connection process between the pressure relief mechanism 13 and the first wall portion 1131, which can reduce the production cost of the case 11.

In some embodiments, referring to FIGS. 15-17 continuously, the first wall portion 1131 is provided with a notching groove 14, and the first wall portion 1131 forms a pressure relief mechanism 13 corresponding to the area where the notching groove 14 is provided.

After setting the notching groove 14 on the first wall portion 1131, the thickness of the first wall portion 1131 in the area where the notching groove 14 is set is reduced to form a weak area. The residual part of the first wall portion 1131 in the area where the notching groove 14 is set is the weak area, which is the pressure relief mechanism 13. When the internal pressure of battery cell 10 reaches the threshold, the pressure relief mechanism 13 (weak area) is damaged to release the pressure inside battery cell 10. When the battery cell 10 is depressurized, the pressure relief mechanism 13 can be damaged by cracking, detachment, or other means.

The notching groove 14 can be formed in various ways, such as stamping, laser etching, milling, etc. The depth direction of the notching groove 14 can be consistent with the thickness direction of the first wall portion 1131. The notching groove 14 can be of various shapes, such as linear groove, circular groove, elliptical groove, annular groove, arc-shaped groove, U-shaped groove, and H-shaped groove. The circular groove refers to a groove with a circular cross section, and the elliptical groove refers to a groove with an elliptical cross section, in which the cross section is perpendicular to the thickness direction of the first wall portion 1131. As an example, in FIGS. 15-17, notching groove 14 is an annular groove.

When forming the notching groove 14, the notching groove 14 can be formed on the plate material first, and then the plate material can be bent to form the case 11. Alternatively, the plate material can be bent first to form the case 11, and then a notching groove 14 can be formed on the case 11.

In this embodiment, the integrated pressure relief mechanism 13 is formed by setting notching grooves 14 on the first wall portion 1131, which has a simple forming method and low production cost.

In some embodiments, referring to FIG. 15 continuously, the first wall portion 1131 has a first inner surface 11312 facing the interior of the case 11, and a notching groove 14 is provided on the first inner surface 11312.

The first wall portion 1131 also has a first outer surface 11313 facing away from the interior of the case 11. Along the thickness direction of the first wall portion 1131, the first outer surface 11313 is opposite to the first inner surface 11312, and there is no notching groove 14 provided on the first outer surface 11313. The portion between the bottom surface of the notching groove 14 and the first outer surface 11313 forms a pressure relief mechanism 13. As an example, the first outer surface 11313 is parallel to the first inner surface 11312, and the distance between the first outer surface 11313 and the first inner surface 11312 is the thickness of the first wall portion 1131.

In the embodiment where the first wall portion 1131 and the second wall portion 1132 are arranged opposite to each other along the first direction X, the first inner surface 11312 faces the second wall portion 1132 along the first direction X, and the first outer surface 11313 faces away from the second wall portion 1132.

In this embodiment, the notching groove 14 is provided with a first inner surface 11312. On the one hand, when forming a notching groove 14 on the first inner surface 11312 of the first wall portion 1131, it is not easy to affect the outer surface of the first wall portion 1131, so that the outer surface of the first wall portion 1131 remains flat. On the other hand, the notching groove 14 is set on the first inner surface 11312 of the first wall portion 1131, and the groove wall surface of the notching groove 14 is not exposed to the outside of the battery cell 10, thereby reducing the risk of oxidation of the first wall portion 1131 in the area where the notching groove 14 is set and improving the stability of the integrated pressure relief mechanism 13.

In some embodiments, referring to FIG. 16, the first wall portion 1131 has a first outer surface 11313 facing away from the interior of the case 11, and a notching groove 14 is provided on the first outer surface 11313.

The first wall portion 1131 also has a first inner surface 11312 facing the interior of the case 11. Along the thickness direction of the first wall portion 1131, the first inner surface 11312 is opposite to the first outer surface 11313, and there is no notching groove 14 provided on the first inner surface 11312. The portion between the bottom surface of the notching groove 14 and the first inner surface 11312 forms a pressure relief mechanism 13. As an example, the first outer surface 11313 is parallel to the first inner surface 11312, and the distance between the first outer surface 11313 and the first inner surface 11312 is the thickness of the first wall portion 1131.

In this embodiment, the notching groove 14 is provided with a first outer surface 11313, such that when forming a notching groove 14 on the first outer surface 11313 of the first wall portion 1131, it is not easy to affect the inner surface of the first wall portion 1131, so that the inner surface of the first wall portion 1131 remains flat.

In some embodiments, referring to FIG. 17, the first wall portion 1131 has a first inner surface 11312 facing the interior of the case 11 and a first outer surface 11313 facing away from the interior of the case 11, wherein both the first inner surface 11312 and the first outer surface 11313 are provided with notching grooves 14.

Along the thickness direction of the first wall portion 1131, the first inner surface 11312 is opposite to the first outer surface 11313, and both the first inner surface 11312 and the first outer surface 11313 are provided with notching grooves 14. As an example, the first outer surface 11313 is parallel to the first inner surface 11312, and the distance between the first outer surface 11313 and the first inner surface 11312 is the thickness of the first wall portion 1131.

During molding, the notching groove 14 located on the first inner surface 11312 can be formed from the inside of the case 11, and the notching groove 14 located on the first outer surface 11313 can be formed from the outside of the case 11.

In some embodiments, the notching groove 14 provided on the first outer surface 11313 is opposite to the notching groove 14 provided on the first inner surface 11312.

There is an overlap part between the projection of the groove bottom surface of the notching groove 14 set on the first outer surface 11313 and the projection of the groove bottom surface of the notching groove 14 set on the first inner surface 11312 along the thickness direction of the first wall portion 1131, then the notching groove 14 set on the first outer surface 11313 and the notching groove 14 set on the first inner surface 11312 are arranged opposite to each other. The extension direction of the notching groove 14 set on the first outer surface 11313 and the extension direction of the notching groove 14 set on the first inner surface 11312 may be the same or different.

As an example, in FIG. 17, the extension direction of the notching groove 14 set on the first outer surface 11313 is the same as that of the notching groove 14 set on the first inner surface 11312, and both extend along an annular trajectory. Along the thickness direction of the first wall portion 1131, the projection of the groove bottom surface of the notching groove 14 set on the first outer surface 11313 completely overlaps with the projection of the groove bottom surface of the notching groove 14 set on the first inner surface 11312. The portion between the groove bottom surface of the notching groove 14 set on the first outer surface 11313 and the groove bottom surface of the notching groove 14 set on the first inner surface 11312 forms a pressure relief mechanism 13. Understandably, the notching groove 14 located on the first outer surface 11313 and the notching groove 14 located on the first inner surface 11312 correspond to the same pressure relief mechanism 13.

In the embodiment, the notching groove 14 provided on the first outer surface 11313 is opposite to the notching groove 14 provided on the first inner surface 11312, such that when the thickness of the first wall portion 1131 and the thickness of the pressure relief mechanism 13 are constant, the processing depth of the notching grooves 14 on the first inner surface 11312 and the first outer surface 11313 is smaller, thereby reducing the forming force on the first wall portion 1131 during the formation of the notching grooves 14 and reducing the risk of cracking on the first wall portion 1131.

In some other embodiments, the notching groove 14 provided on the first outer surface 11313 is offset from the notching groove 14 provided on the first inner surface 11312. There is no overlap part between the projection of the groove bottom surface of the notching groove 14 set on the first outer surface 11313 and the projection of the groove bottom surface of the notching groove 14 set on the first inner surface 11312 along the thickness direction of the first wall portion 1131. In this way, multiple pressure relief mechanisms 13 will be formed on the first wall portion 1131, thereby improving the reliability of the battery cell 10.

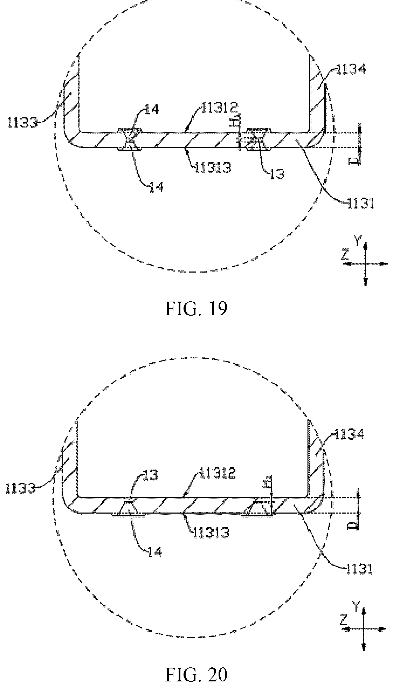

In some embodiments, referring to FIGS. 18-19, FIG. 18 is a partially enlarged view of a case 11 (with a protrusion 15 on the first inner surface 11312) provided in some embodiments of the present disclosure; and FIG. 19 is a partially enlarged view of the case 11 (with protrusions 15 on both the first inner surface 11312 and the first outer surface 11313) provided in some embodiments of the present disclosure. The first wall portion 1131 is provided with a protrusion 15 protruding from the first inner surface 11312 at the edge position of the notching groove 14.

The protrusion 15 protruding from the first inner surface 11312 corresponds to the notching groove 14 set on the first inner surface 11312. For the notching groove 14 set on the first inner surface 11312, the position where the groove side of the notching groove 14 intersects with the first inner surface 11312 is the edge position of the notching groove 14. For the protrusion 15 protruding from the first inner surface 11312, the extension direction of the protrusion 15 can be consistent with the extension direction of the notching groove 14. The protrusion 15 can be integrally formed with the first wall portion 1131, and the protrusion 15 and the first wall portion 1131 can also be separately set and connected, for example, by welding.

As an example, the notching groove 14 can be stamped on the first inner surface 11312. During the stamping process of the notching groove 14, if the material accumulates on the outside of the notching groove 14, it can correspondingly form a protrusion 15 protruding from the first inner surface 11312.

In the embodiment, the protrusion 15 protruding from the first inner surface 11312 strengthens the area where the notching groove 14 is set on the first wall portion 1131, thereby enhancing the pressure relief mechanism 13, improving the fatigue resistance of the pressure relief mechanism 13, and reducing the risk of damage to the first wall portion of the battery cell 10 due to fatigue of the pressure relief mechanism 13 under normal use conditions.

In some embodiments, referring to FIGS. 19 and 20, FIG. 20 is a partially enlarged view of a case 11 (with a protrusion 15 on the first outer surface 11313) provided in some embodiments of the present disclosure The first wall portion 1131 is provided with a protrusion 15 protruding from the first outer surface 11313 at the edge position of the notching groove 14.

The protrusion 15 protruding from the first outer surface 11313 corresponds to the notching groove 14 set on the first outer surface 11313. For the notching groove 14 set on the first outer surface 11313, the position where the groove side of the notching groove 14 intersects with the first outer surface 11313 is the edge position of the notching groove 14. For the protrusion 15 protruding from the first outer surface 11313, the extension direction of the protrusion 15 can be consistent with the extension direction of the notching groove 14. The protrusion 15 can be integrally formed with the first wall portion 1131, and the protrusion 15 and the first wall portion 1131 can also be separately set and connected, for example, by welding.

As an example, the notching groove 14 can be stamped on the first outer surface 11313. During the stamping process of the notching groove 14, if the material accumulates on the outside of the notching groove 14, it can correspondingly form a protrusion 15 protruding from the first outer surface 11313.

In the embodiment, the protrusion 15 protruding from the first outer surface 11313 strengthens the area where the notching groove 14 is set on the first wall portion 1131, thereby enhancing the pressure relief mechanism 13, improving the fatigue resistance of the pressure relief mechanism 13, and reducing the risk of damage to the first wall portion 1131 of the battery cell 10 due to fatigue of the pressure relief mechanism 13 under normal use conditions.

In some embodiments, referring to FIGS. 15-20 continuously, along the thickness direction of the first wall portion 1131, the thickness of the first wall portion 1131 is D, and the residual thickness of the area where the notching groove 14 is set on the first wall portion 1131 is H₁, where H₁/D ≤ 0.7.

H₁/D can be a point value of any one of 0.1, 0.2, 0.3, 0.4, 0.5, 0.6, 0.7, or a range value between any two therein.

Along the thickness direction of the first wall portion 1131, the first wall portion 1131 has opposite first inner surface 11312 and first outer surface 11313. The minimum distance between the first inner surface 11312 and the first outer surface 11313 is the thickness D of the first wall portion 1131. As an example, the first inner surface 11312 is arranged parallel to the first outer surface 11313, and the distance between the first inner surface 11312 and the first outer surface 11313 is the thickness D of the first wall portion 1131.

The thickness of the pressure relief mechanism 13 is the residual thickness H₁ of the area where the notching groove 14 is set on the first wall portion 1131. In the embodiments shown in FIGS. 15 and 18, the notching groove 14 is provided on the first inner surface 11312, and the minimum distance between the groove bottom surface of the notching groove 14 and the first outer surface 11313 is the residual thickness H₁ of the area where the notching groove 14 is provided on the first wall portion 1131. In the embodiments shown in FIGS. 16 and 20, the notching groove 14 is provided on the first outer surface 11313, and the minimum distance between the groove bottom surface of the notching groove 14 and the first inner surface 11312 is the residual thickness H₁ of the area where the notching groove 14 is provided on the first wall portion 1131. In the embodiments shown in FIGS. 17 and 19, both the first outer surface 11313 and the first inner surface 11312 are provided with notching grooves 14, and the notching groove 14 provided on the first outer surface 11313 and the notching groove 14 provided on the first inner surface 11312 are arranged opposite to each other. The minimum distance between the bottom surface of the notching groove 14 provided on the first outer surface 11313 and the bottom surface of the notching groove 14 provided on the first inner surface 11312 is the residual thickness H₁ of the area where the notching grooves 14 are provided on the first wall portion 1131.

The inventor conducted multiple groups of experiments, and the residual thickness (thickness of the pressure relief mechanisms 13) in the areas where the notching groove 14 is set on the first wall portion 1131 of the battery cells 10 in different groups was different. The cracking rate of the weak area of each group of battery cells 10 under normal use conditions and the exploding rate of battery cells 10 during thermal runaway were measured. The test results are shown in below Table 1.

### (1) Measuring the cracking rate of the pressure relief mechanism 13 of battery cell 10 under normal usage conditions.

Battery cell 10 was placed under the condition of 25±2^{°}C for cyclic charging and discharging, with a charging and discharging range of 5%-97% SOC. At the same time, the internal generated-gas pressure of battery cell 10 was monitored, and 1000 sets of tests were conducted. The cut-off condition for the test was that the lifespan of battery cell 10 decreased to 80% SOH or pressure relief mechanism 13 was cracked during cycling of any group of battery cells 10. The criterion for determining the cracking of pressure relief mechanism 13 was that the internal air pressure value of battery cell 10 decreased, and the decreased value was greater than 10% of the maximum air pressure. The cracking rate of pressure relief mechanism 13 was calculated, with cracking rate=number with crack/total number * 100%.

### (2) Measuring exploding rate of battery cell 10 during thermal runaway

A small heating film was arranged inside the battery cell 10, which was energized to heat the battery cell 10 until it experienced thermal runaway. Whether the battery cell 10 exploded was observed. 1000 sets of experiments were repeated and the exploding rate of battery cell 10 was calculated. The exploding rate was equal to the number with explosion/total number * 100%.

**Table 1**

| Number | H₁ (mm) | D (mm) | H₁/D | Cracking rate | Exploding rate |
|---|---|---|---|---|---|
| 1 | 0.02 | 0.2 | 0.1 | 0.5 | 0 |
| 2 | 0.05 | 0.2 | 0.25 | 0.003 | 0 |
| 3 | 0.08 | 0.2 | 0.4 | 0 | 0 |
| 4 | 0.1 | 0.2 | 0.5 | 0 | 0.003 |
| 5 | 0.12 | 0.2 | 0.6 | 0 | 0.01 |
| 6 | 0.14 | 0.2 | 0.7 | 0 | 0.05 |
| 7 | 0.16 | 0.2 | 0.8 | 0 | 0.2 |

From Table 1, it can be seen that when H₁/D>0.7, the detonation pressure of the battery cell 10 is too high, making it more difficult for the pressure relief mechanism 13 to be damaged when the battery cell 10 is in thermal runaway, which can lead to delayed pressure relief. Therefore, H₁/D ≤ 0.7 can effectively improve the timeliness of battery cell 10 releasing pressure and reduce the risk of explosion due to battery cell 10 being in thermal runaway.

In some embodiments, H₁ ≥ 0.05mm.

H₁ can be a point value of any one of 0.05 mm, 0.08 mm, 0.1 mm, 0.12 mm, 0.14 mm, 0.15 mm, 0.16 mm, 0.2 mm, 0.25 mm, and 0.3 mm, or a range value between any two therein.

From Table 1, it can be seen that when H₁<0.05mm, under normal use conditions of the battery cell 10, the first wall portion 1131 in the area where the notching groove 14 is set (pressure relief mechanism 13) is too thin and has excessive stress. The pressure relief mechanism 13 is prone to fatigue and creep, which can shorten its service life and cause premature damage to the pressure relief mechanism 13. The cracking rate of the pressure relief mechanism 13 of battery cell 10 is relatively high under normal usage conditions, affecting the service life of the battery cell 10. Therefore, H₁ ≥ 0.05mm reduces the risk of damage to the pressure relief mechanism 13 under normal use conditions of the battery cell 10 and improves the service life of the battery cell 10.

In some embodiments, D ≤ 0.6mm.

D can be a point value of any one of 0.1 mm, 0.2 mm, 0.3 mm, 0.4 mm, 0.5 mm, and 0.6 mm, or a range value between any two therein.

In the embodiment, D ≤ 0.6mm makes the first wall portion 1131 thinner, so that when the shape and dimension of the case 11 are fixed, the internal space of the case 11 can be increased, which is beneficial for improving the energy density of the battery cell 10.

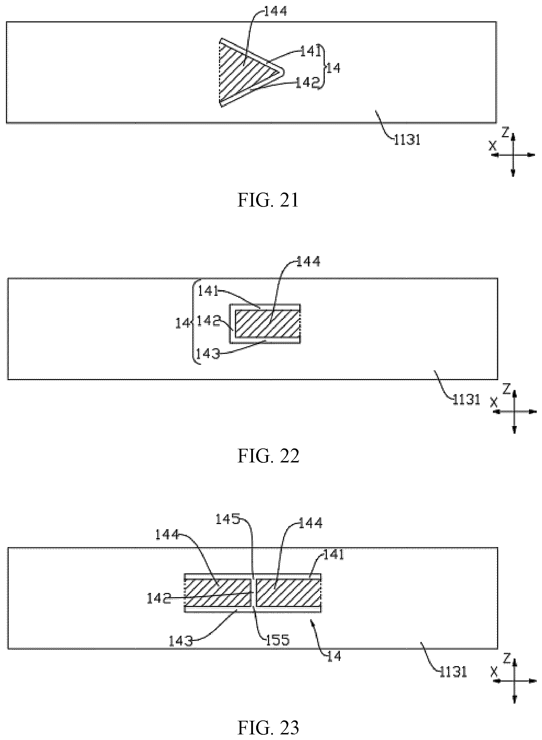

In some embodiments, referring to FIG. 21, FIG. 21 is a schematic view of the structure of the first wall portion 1131 (with V-shaped pressure relief groove) provided in some embodiments of the present disclosure. The notching groove 14 includes a first groove segment 141 and a second groove segment 142, with the first groove segment 141 intersecting with the second groove segment 142.

The first groove segment 141 and the second groove segment 142 can be linear grooves or non-linear grooves, such as arc-shaped grooves. In the example where the first groove segment 141 and the second groove segment 142 are both linear grooves, the first groove segment 141 and the second groove segment 142 both extend along the straight line trajectory, and the first groove segment 141 and the second groove segment 142 can be set at acute, right or obtuse angles. The first groove segment 141 and the second groove segment 142 can be set in a cross manner, for example, the intersection position of the first groove segment 141 and the second groove segment 142 is located at the midpoint positions of the first groove segment 141 and the second groove segment 142. For example, as shown in FIG. 21, the intersection position of the first groove segment 141 and the second groove segment 142 can also be located at one end of the first groove segment 141 and one end of the second groove segment 142. The first groove segment 141 and the second groove segment 142 form a V-shaped structure, and the notching groove 14 is V-shaped. The notching groove 14 defines a pressure relief area 144, with the first groove segment 141 and the second groove segment 142 located at the edges of the pressure relief area 144. When the battery cell 10 is in thermal runaway, the case 11 can crack along the first groove segment 141 and the second groove segment 142, and the case 11 can be flipped outward from the pressure relief area 144 to achieve large-scale pressure relief of the case 11. The triangular shaded area shown in FIG. 21 is the pressure relief area 144.

The stress at the intersection position of the first groove segment 141 and the second groove segment 142 is more concentrated, making it easier for the case 11 to be damaged at the intersection position of the first groove segment 141 and the second groove segment 142, improving the pressure relief sensitivity of the case 11, and timely releasing the pressure when the internal pressure of the battery cell 10 reaches the detonation pressure. When the detonation pressure of the battery cell 10 is constant, the depth of the notching groove 14 can be appropriately reduced to increase the residual thickness of the case 11 in the area where the notching groove 14 is set, thereby improving the fatigue strength of the case 11 in the area where the notching groove 14 is set.

In some embodiments, referring to FIGS. 22 and 23, FIG. 22 is a schematic view of the structure of the first wall portion 1131 (with U-shaped pressure relief groove) provided in some embodiments of the present disclosure; and FIG. 23 is a schematic view of the structure of the first wall portion 1131 (with H-shaped pressure relief groove) provided in some embodiments of the present disclosure The notching groove 14 further comprises a third groove segment 143, the first groove segment 141 is arranged opposite to the third groove segment 143, and the third groove segment 143 intersects with the second groove segment 142.

The first groove segment 141, the second groove segment 142, and the third groove segment 143 can all be linear grooves or non-linear grooves, such as arc-shaped grooves. In the embodiments where the first groove segment 141, the second groove segment 142, and the third groove segment 143 are all linear grooves, the first groove segment 141, the second groove segment 142, and the third groove segment 143 all extend along the straight line trajectory. The first groove segment 141 and the third groove segment 143 can be set in parallel. The first groove segment 141 and the third groove segment 143 can be perpendicular to the second groove segment 142, or they may be not perpendicular to the second groove segment 142.

In the embodiment, the case 11 has a larger pressure relief area after cracking along the first groove segment 141, second groove segment 142, and third groove segment 143, thereby achieving a large-scale pressure relief. In addition, the intersection position of the third groove segment 143 and the second groove segment 142 is more concentrated, and the case 11 is more easily damaged at the intersection position of the second groove segment 142 and the third groove segment 143, which improves the pressure relief sensitivity of the case 11 and timely releases pressure when the internal pressure of the battery cell 10 reaches the detonation pressure. Similarly, when the detonation pressure of the battery cell 10 is constant, the depth of the notching groove 14 can be appropriately reduced to increase the residual thickness of the case 11 in the area where the notching groove 14 is set, thereby improving the fatigue strength of the case 11 in the area where the notching groove 14 is set.

In some embodiments, referring to FIG. 22, the first groove segment 141, the second groove segment 142, and the third groove segment 143 are sequentially connected.

The first groove segment 141, the second groove segment 142, and the third groove segment 143 are sequentially connected to form a U-shaped structure or a Z-shaped structure. As an example, in the embodiment shown in FIG. 22, the first groove segment 141, the second groove segment 142, and the third groove segment 143 are sequentially connected to form a U-shaped structure. The pressure relief groove defines a pressure relief area 144, with the first groove segment 141, the second groove segment 142, and the third groove segment 143 located at the edges of the pressure relief area 144. When the battery cell 10 is in thermal runaway, the case 11 can crack along the first groove segment 141, the second groove segment 142 and the third groove segment 143, and the case 11 can be flipped outward from the pressure relief area 144 to achieve large-scale pressure relief of the case 11. The rectangular shaded area shown in FIG. 22 is the pressure relief area 144.

In the embodiment, the first groove segment 141, the second groove segment 142, and the third groove segment 143 are sequentially connected. The notching groove 14 has a simple structure and is easy to form.

In some embodiments, the intersection of the first groove segment 141 and the second groove segment 142 is at a first position 145, wherein the first position 145 deviates from the two ends of the first groove segment 141 in the extension direction. The intersection of the third groove segment 143 and the second groove segment 142 is at the second position 155, which deviates from the two ends of the third groove segment 143 in the extension direction.

The first position 145 is the position where the first groove segment 141 is connected to the second groove segment 142. The first position 145 deviates from the two ends of the first groove segment 141 in the extension direction, that is, there is a distance between the first position 145 and the two ends of the first groove segment 141 in the extension direction of the first groove segment 141. The second position 155 is the position where the third groove segment 143 is connected to the second groove segment 142. The second position 155 deviates from the two ends of the third groove segment 143 in the extension direction, that is to say, there is a distance between the second position 155 and the two ends of the third groove segment 143 in the extension direction of the third groove segment 143.

The first groove segment 141, the second groove segment 142, and the third groove segment 143 define two pressure relief areas 144, which are located on either side of the second groove segment 142. The two rectangular shaded areas shown in FIG. 23 are both pressure relief areas 144.

During pressure relief, the areas (pressure relief areas) on both sides of the second groove segment 142 of the case 11 can be opened after the case 11 splits along the first groove segment 141, second groove segment 142, and third groove segment 143, which can effectively improve the pressure relief efficiency of the case 11.

In some embodiments, the first position 145 is located at the midpoint of the first groove segment 141 in the extension direction, and the second position 155 is located at the midpoint of the third groove segment 143 in the extension direction.

As an example, the first groove segment 141, the second groove segment 142, and the third groove segment 143 are all linear grooves extending along a straight line trajectory. The first groove segment 141 and the third groove segment 143 are arranged parallel, the first groove segment 141 and the second groove segment 142 are perpendicular, and the lengths of the first groove segment 141 and the third groove segment 143 are equal.

In this embodiment, the first position 145 and the second position 155 are located at the midpoint positions of the first groove segment 141 and the third groove segment 143, respectively, such that the case 11 is more easily damaged in the first position 145 and second position 155, improving the pressure relief sensitivity of the case 11 and enhancing the timeliness of pressure relief.

In some embodiments, the notching groove 14 is a groove that extends along a non-closed trajectory.

A non-closed trajectory refers to a trajectory where the two ends in the extension direction are not connected. As an example, the notching groove 14 defines a pressure relief area 144, and the notching groove 14 is located at the edge of the pressure relief area 144. Non-closed trajectories can be arc-shaped trajectories, U-shaped trajectories, etc. If the notching groove 14 extends along an arc trajectory, the notching groove 14 is in the shape of a circular arc. If notching groove 14 extends along a U-shaped trajectory, the notching groove 14 is a U-shaped groove.

During the pressure relief process, the area defined by the notching groove 14 (pressure relief area 144) can be opened in a flipped manner, and after opening, this area is ultimately connected to other parts of the case 11, reducing the risk of splashing in the opened part.

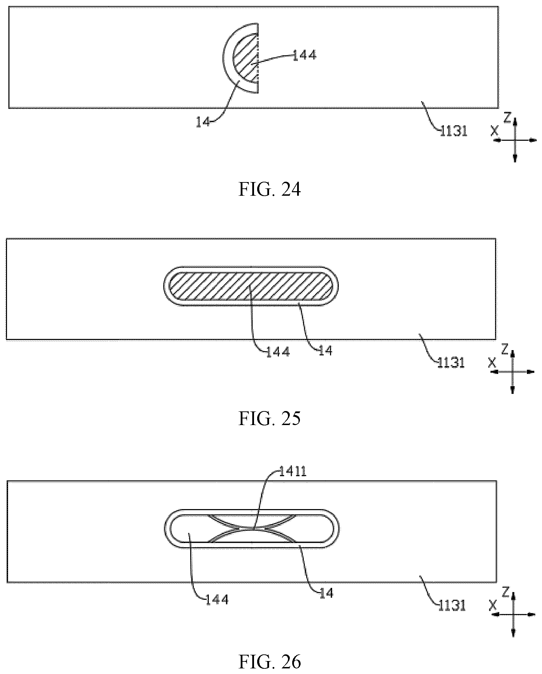

In some embodiments, referring to FIG. 24, FIG. 24 is a schematic view of the structure of the first wall portion 1131 (with a arc-shaped pressure relief groove) provided in some embodiments of the present disclosure. In some embodiments, the notching groove 14 is an arc-shaped groove.

The arc-shaped groove is a groove that extends along an arc-shaped trajectory, and the arc-shaped trajectory is a non-closed trajectory. The pressure relief area 144 is defined by the notching groove 14, which is located at the edge of the pressure relief area 144. The center angle of the arc-shaped groove can be less than, equal to, or greater than 180°. As an example, in the embodiment shown in FIG. 24, the center angle of the arc-shaped groove is 180°. The semi-circular shaded area shown in FIG. 24 is the pressure relief area 144.

The arc-shaped groove is simple in structure and easy to form. During the pressure relief process, the case 11 can quickly crack along the arc-shaped groove, allowing the area (pressure relief area 144) defined by the arc-shaped groove to quickly open.

In some embodiments, the notching groove 14 is a groove that extends along a closed trajectory.

Closed trajectories refer to trajectories that are connected at both ends, and can be circular trajectories, rectangular trajectories, elliptical trajectory, etc. The pressure relief area 144 is defined by the notching groove 14, which is located at the edge of the pressure relief area 144.

During the pressure relief process, the case 11 can crack along the notching groove 14, allowing the area (pressure relief area 144) defined by the notching groove 14 to open in a detached manner, increasing the pressure relief area of the case 11 and improving the pressure relief rate of the case 11.

In some embodiments, FIG. 25 is a schematic view of the structure of the first wall portion 1131 (pressure relief groove is an annular groove) provided in some embodiments of the present disclosure. Notching groove 14 is an annular groove.

The annular grooves can be rectangular or circular.

As an example, in FIG. 25, the notching groove 14 is generally an rectangular annular groove. The notching groove 14 includes two straight line segments and two circular arc segments. The two straight line segments are arranged in parallel, and one straight line segment, one circular arc segment, another straight line segment, and another circular arc segment are connected in sequence end to end. The distance between two straight line segments is less than the minimum distance between two circular arc segments.

In the embodiment, the annular groove is simple in structure and easy to form. During the pressure relief process, the case 11 can quickly crack along the annular groove, allowing the area defined by the annular groove to quickly open.

It should be noted that in the above embodiments where the pressure relief area 144 is defined by the notching groove 14, reinforcing ribs 1411 can be installed in the pressure relief area 144. By strengthening the pressure relief area 144 by the reinforcing ribs 1411, the anti-deformation ability of the pressure relief area 144 is improved, thereby reducing the risk of deformation of the pressure relief area 144 caused by internal pressure changes in the battery cell 10, which may result in damage to the case 11 at the position of the notching groove 14, and improving the service life of the battery cell 10.

Referring to FIG. 26, FIG. 26 is a schematic view of the structure of the first wall portion 1131 (the pressure relief groove is an annular groove) provided in some other embodiments of the present disclosure. Taking the pressure relief groove being an annular groove as an example, the pressure relief area 144 defined by the pressure relief groove can be equipped with reinforcing ribs 1411, which can be installed on the first inner surface 11312 (not shown in FIG. 26) and/or the first outer surface 11313 (not shown in FIG. 26) of the first wall portion 1131. The reinforcing rib 1411 can be in the form of a straight line, a circular arc, a U shape, a C shape, an H shape, a ring shape, etc.

As an example, as shown in FIG. 26, the reinforcing rib 1411 includes two circular arc ribs, with their openings facing away form each other, and the middle areas of the two circular arc ribs connected together. The reinforcing ribs 1411 of this structure can have a better strengthening effect on the pressure relief area 144, thereby improving the deformation resistance of the pressure relief area 144.

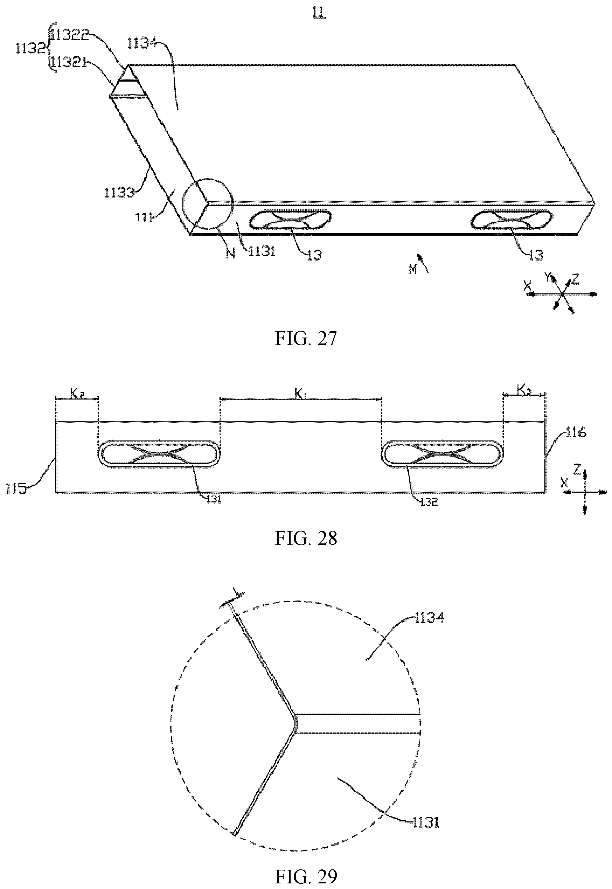

In some embodiments, referring to FIG. 27, FIG. 27 is a schematic view of the structure of the case 11 provided in some other embodiments of the present disclosure. The openings at both ends of the case 11 are arranged opposite to each other along the first direction X, and the multiple wall portions 113 include a first wall portion 1131, wherein the first wall portion 1131 is provided with multiple pressure relief mechanisms 13, which are arranged along the first direction X.

The first wall portion 1131 can be any one of the multiple wall portions 113 of the case 11, and the pressure relief mechanism 13 is located on this wall portion 113. The connection position 114 of the two ends 112 of the plate material can be located on the first wall portion 1131 or on the other wall portions 113 of the case 11. As an example, in the embodiment shown in FIG. 27, the connection position 114 is located at the second wall portion 1132 opposite to the first wall portion 1131.

The pressure relief mechanisms 13 on the first wall portion 1131 can be provided in a number of two, three, four, five, or more, with adjacent pressure relief mechanisms 13 spaced apart. The pressure relief mechanism 13 and the first wall portion 1131 can be separately provided or integrally formed. As an example, in the embodiment shown in FIG. 27, the pressure relief mechanism 13 is integrally formed with the first wall portion 1131.

In the event of thermal runaway of the battery cell 10, multiple pressure relief mechanisms 13 on the first wall portion 1131 can be used to release pressure, improving the timeliness of pressure relief and enhancing the reliability of the battery cell 10. When a part of the pressure relief mechanisms 13 on the first wall portion 1131 are obstructed or fails, the pressure can be released through another part of the pressure relief mechanisms 13 on the first wall portion 1131 to improve the reliability of the battery cell 10.

In some embodiments, referring to FIG. 27 continuously, two pressure relief mechanisms 13 are provided on the first wall portion 1131. The case 11 has a good pressure relief capability, and the production cost of the case 11 is reduced.

In some embodiments, referring to FIG. 28, FIG. 28 is a M-direction view of the case 11 shown in FIG. 27. The two pressure relief mechanisms 13 are respectively the first pressure relief mechanism 131 and the second pressure relief mechani sm 132. Along the first direction X, the case 11 has opposite first open end 115 and second open end 116, wherein the first pressure relief mechanism 131 is closer to the first open end 115 than the second pressure relief mechanism 132; the distance between the first pressure relief mechanism 131 and the second pressure relief mechanism 132 is K₁; the distance between the first pressure relief mechanism 131 and the first open end 115 is K₂; and the distance between the second pressure relief mechanism 132 and the second open end 116 is K₃, where K₂<K₁, and K₃<K₁.

The first open end 115 is the end of the case 11 where an opening along the first direction X is located. The second open end 116 is the end of the case 11 where another opening along the first direction X is located. The distance between the first open end 115 and the second open end 116 is the length of the case 11.

The distance between the end of the first pressure relief mechanism 131 facing the second pressure relief mechanism 132 and the end of the second pressure relief mechanism 132 facing the first pressure relief mechanism 131 along the first direction X is the distance K₁ between the first pressure relief mechanism 131 and the second pressure relief mechanism 132. The distance between the end of the first pressure relief mechanism 131 facing away from the second pressure relief mechanism 132 and the first open end 115 along the first direction X is the distance K₂ between the first pressure relief mechanism 131 and the first open end 115. The distance between the end of the second pressure relief mechanism 132 facing away from the first pressure relief mechanism 131 and the second open end 116 along the first direction X is the distance K₃ between the second pressure relief mechanism 132 and the second open end 116.

K₁ and K₂ can be equal or unequal.

When a battery cell 10 is in thermal runaway, the emissions inside the battery cell 10 are more likely to accumulate in the areas near the two ends of the case 11. Due to K₂<K₁, and K₃<K₁, the first pressure relief mechanism 131 is located near the first open end 115, and the second pressure relief mechanism 132 is located near the second open end 116, making it easier for the emissions inside the battery cell 10 to be discharged through the first pressure relief mechanism 131 and second pressure relief mechanism 132, thereby improving the timeliness of pressure relief.

In some embodiments, K₂ /K₁≤ 0.5; and/or K₃ /K₁≤ 0.5.

K₂ /K₁ can be a point value of any one of 0.1, 0.2, 0.3, 0.4, and 0.5, or a range value between any two therein. K₃ /K₁ can be a point value of any one of 0.1, 0.2, 0.3, 0.4, and 0.5, or a range value between any two therein.

K₂/K₁ ≤ 0.5, so that the first pressure relief mechanism 131 is closer to the first open end 115, facilitating the discharge of internal emissions through the first pressure relief mechanism 131 in case of thermal runaway of the battery cell 10. K₃/K₁ ≤ 0.5 can make the second pressure relief mechanism 132 closer to the second open end 116, facilitating the discharge of internal emissions through the second pressure relief mechanism 132 in case of thermal runaway of the battery cell 10.

In some embodiments, the end faces of the front and rear ends of the plate material are connected to each other.

For example, the plate material is a rectangular plate before forming into the case 11, such that the end faces of the front and rear ends of the plate material can be the two opposite end faces of the plate material in the length direction. The case 11 formed by connecting the end faces of the front and rear ends of the plate material can have various shapes, such as cylindrical, prismatic, etc.

As shown in FIG. 27, in the embodiment where the second wall portion 1132, which is opposite to the first wall portion 1131, includes the first connecting wall 11321 and the second connecting wall 11322, the first end face 1121 (not shown in FIG. 27) of the first connecting wall 11321 and the second end face 1122 (not shown in FIG. 27) of the second connecting wall 11322 are respectively the end faces of the head and rear ends of the plate material.

In the embodiment, the end faces of the front and rear ends of the plate material are connected to each other. On the one hand, there is no overlapping part between the two ends 112 of the plate material after connection, which saves materials and reduces production costs. On the other hand, the end faces at both ends of the case 11 are connected to each other, making the case 11 flatter and increasing the internal space of the case 11, which is beneficial for improving the energy density of the battery cell 10.

In some embodiments, the two ends 112 of the plate material are welded together.

In the embodiment where the second wall portion 1132, which is opposite to the first wall portion 1131, includes the first connecting wall 11321 and the second connecting wall 11322, the first connecting wall 11321 and the second connecting wall 11322 are respectively the two ends 112 of the plate material.

In some embodiments, the two ends 112 of the plate material are welded together. In this way, the two ends 112 have good connection strength, and the connection between the two ends 112 is more secure.

In some embodiments, the case 11 comprises multiple wall portions 113 forming an accommodating space 111, wherein the connection position 114 between the two ends 112 of the plate material is located on one wall portion.

Taking the case 11 as an example, which includes four wall portions 113, the four wall portions 113 form a cuboid case. The connection position 114 of the two ends 112 of the plate material can be located at any one of the four wall portions 113. As an example, as shown in FIG. 27, the connection position 114 of the two ends 112 is located at the first wall portion 1131.

In this embodiment, the connection position 114 of the two ends 112 of the plate material is located on one wall portion, which can reduce the difficulty of connecting the two ends 112 and improve the connection strength of the connection position 114.

In some embodiments, referring to FIG. 29, FIG. 29 is a partially enlarged view of the N position of the case 11 shown in FIG. 27. The wall thickness of the case 11 is L, where L ≤ 0.6mm.

L can be a point value of any one of 0.1 mm, 0.2 mm, 0.3 mm, 0.4 mm, 0.5 mm, and 0.6 mm, or a range value between any two therein.

It can be understood that in the embodiment where the case 11 is formed by multiple wall portions 113, the thickness of each wall portion 113 in the case 11 is not greater than 0.6mm. Taking the case 11 formed by the first wall portion 1131, the second wall portion 1132, the third wall portion 1133, and the fourth wall portion 1134 as an example, the thickness of the first wall portion 1131, the thickness of the second wall portion 1132, the thickness of the third wall portion 1133, and the thickness of the fourth wall portion 1134 are all not greater than 0.6mm.

In the embodiment, L≤0.6mm. In this way, the case 11 formed by bending the plate material is a thin-walled case, which is conducive to achieving lightweight of the battery cell 10. With a certain shape and size of the case 11, the thin-walled case has a larger internal space, which can provide a larger accommodation space 111 for the electrode assembly 2 and improve the energy density of the battery cell 10.

In some embodiments, the case 11 is a cuboid case. This is suitable for cuboid battery cells 10, which is capable of meeting the high capacity requirements of battery cells 10.

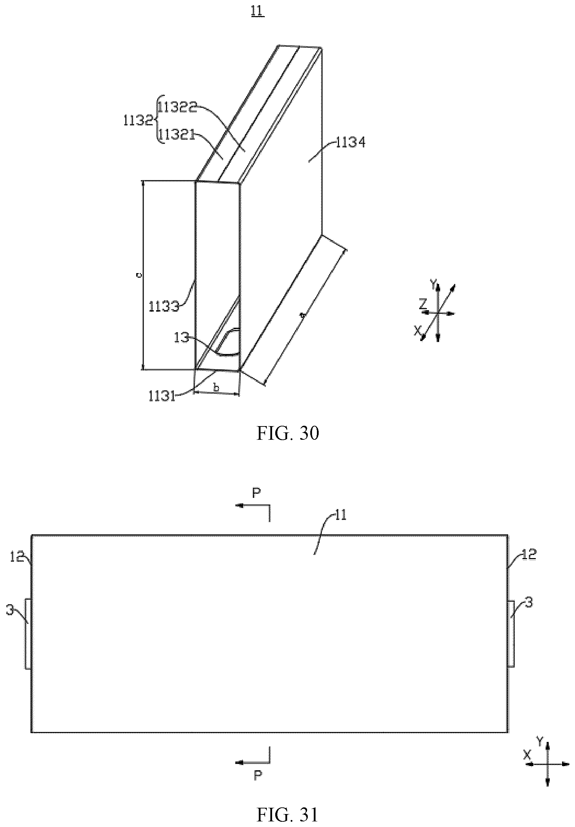

In some embodiments, referring to FIG. 30, FIG. 30 is a schematic view of the structure of the case 11 provided in some other embodiments of the present disclosure. The openings at both ends of the case 11 are arranged opposite to each other along the length direction of the case 11, wherein the case 11 has a length of a, a width of b, and a height of c, where b ≤ c ≤ a/1.5.

It can be understood that a/c≥1.5, wherein a/c can be a point value of any one of 1.5, 2, 3, 4, 5, or a range value between any two therein. It can be b<c or b=c. In the embodiment shown in FIG. 30, b<c.

Taking the case 11 formed by the first wall portion 1131, the second wall portion 1132, the third wall portion 1133, and the fourth wall portion 1134 as an example, the openings at both ends of the case 11 are arranged opposite to each other along the first direction X, the first wall portion 1131 and the second wall portion 1132 are arranged opposite to each other along the second direction Y, the third wall portion 1133 and the fourth wall portion 1134 are arranged opposite to each other along the third direction Z, and the adjacent two wall portions 113 in the case 11 are perpendicular to each other. The first direction X can be the length direction of the case 11, the second direction Y can be the height direction of the case 11, and the third direction Z can be the width direction of the case 11.

In the embodiment, the case 11 is elongated, which is beneficial for improving the energy density of the battery cell 10. In addition, due to the fact that the elongated case is formed by bending the plate material, the difficulty of forming it is lower compared to traditional stamping or stretching, making it easier to form thin-walled elongated cases.

In some embodiments, the openings at both ends of the case 11 are arranged opposite to each other along the length direction of the case 11, and the length of the case 11 is a, where a ≥ 150mm.

The a can be a point value of any one of 150mm, 180mm, 200mm, 240mm, 260mm, 280mm, 300mm, 350mm, 400mm, 450mm, and 500mm, or a range value between any two therein.

In the embodiment, a ≥ 150mm. The longer length of the case 11 is beneficial for improving the energy density of the battery cell 10.

In some embodiments, a ≥ 300mm.

The a can be a point value of any one of 300mm, 350mm, 400mm, 450mm, 500mm, 550mm, 600mm, 650mm, 700mm, 750mm, 800mm, 850mm, 900mm, 950mm, and 1000mm, or a range value between any two therein.

In the embodiment, a ≥ 300mm. This further enhances the energy density of battery cells 10.

In some embodiments, the material of the case 11 includes aluminum alloy. Aluminum alloy cases 11 are lightweight, have good ductility, and are easy to form.

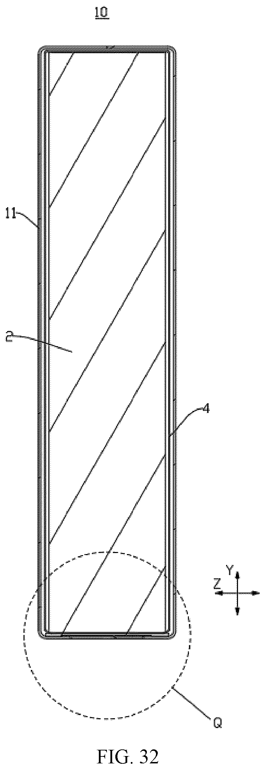

Referring to FIGS. 31 and 32, FIG. 31 is a front view of the battery cell 10 provided in some embodiments of the present disclosure; and FIG. 32 is a p-p sectional view of the battery cell 10 shown in FIG. 31. The embodiment of the present disclosure provides a battery cell 10, which includes an electrode assembly 2, end cover 12 and case 11 provided in any one of the above embodiments. The electrode assembly 2 is accommodated in the accommodating space 111. End covers 12 correspond one-to-one with the openings, and end cover 12 closes the opening.

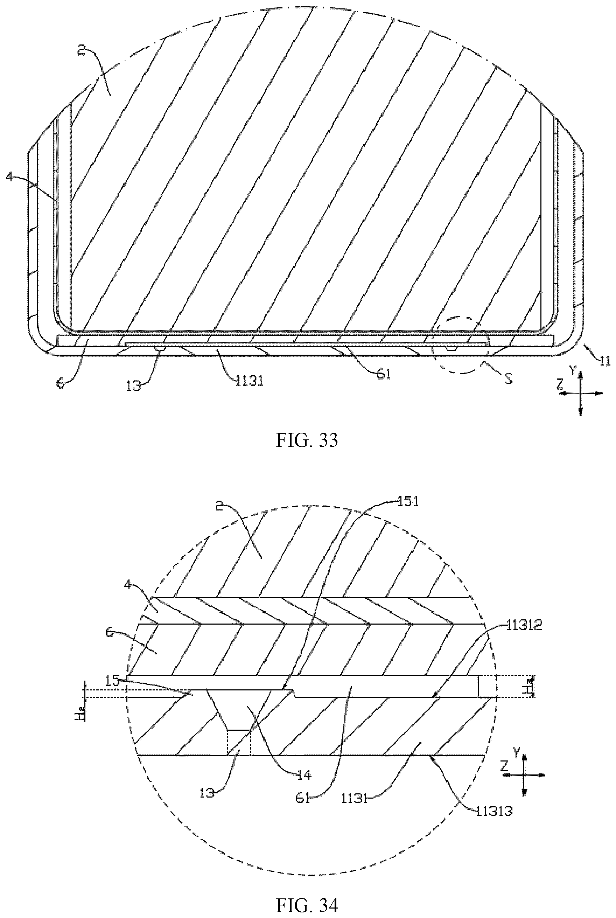

In some embodiments, referring to FIG. 33, FIG. 33 is a partially enlarged view of the Q position of the battery cell 10 shown in FIG. 32. The case 11 includes a first wall portion 1131, which is equipped with a pressure relief mechanism 13. The battery cell 10 also includes a support member 6, wherein the support member 6 is disposed between the first wall portion 113 1 and the electrode assembly 2, and is configured to support the electrode assembly 2.

The first wall portion 1131 may be one of the multiple wall portions 113 located at the bottom in the case 11, and the pressure relief mechanism 13 is located at the first wall portion 1131. The thickness direction of the first wall portion 1131 is the direction of gravity of the case 11, and the thickness direction of the first wall portion 1131 is the second direction Y. In the battery cell 10, when the battery cell 10 is placed on other components (such as the box 20 in the battery 100), the other components are located at the bottom of the battery cell 10, and the first wall portion 1131 in the case 11 contacts the other components.

The pressure relief mechanism 13 and the first wall portion 1131 can be separately provided or integrally formed. As an example, in the embodiment shown in FIG. 33, the pressure relief mechanism 13 is integrally formed with the first wall portion 1131.

The support member 6 is a component set between the electrode assembly 2 and the first wall portion 1131 and supporting the electrode assembly 2. The support member 6 is used to bear the gravity of the electrode assembly 2. The support member 6 may be a plate-shaped structure provided between the electrode assembly 2 and the first wall portion 1131. The support member 6 is located on the side of the first wall portion 1131 facing the electrode assembly 2, and the gravity of the electrode assembly 2 can be transmitted to the first wall portion 1131 through the support member 6.

Support member 6 can directly support electrode assembly 2, that is, support member 6 is located at the bottom of electrode assembly 2 and in direct contact with electrode assembly 2. The support member 6 can also indirectly support the electrode assembly 2, that is, the support member 6 is located at the bottom of the electrode assembly 2, and other components are provided between the support member 6 and the electrode assembly 2.

As an example, the battery cell 10 also includes a first insulating member 4, which is wrapped around the electrode assembly 2 and used to insulate and isolate the electrode assembly 2 from the case 11. The first insulating member 4 is partially located between the electrode assembly 2 and the support member 6, and the support member 6 indirectly supports the electrode assembly 2 through the first insulating member 4.

In the embodiment, the support member 6 can bear the weight of the electrode assembly 2 and separate the first wall portion 1131 from the electrode assembly 2, thereby reducing the impact of the electrode assembly 2 on the pressure relief mechanism 13 and improving its lifespan.

In some embodiments, referring to FIG. 34, FIG. 34 is a partially enlarged view of the S position of the battery cell 10 shown in FIG. 33. An avoidance groove 61 is provided on the side of the support member 6 facing the first wall portion 1131, and the projection of the pressure relief mechanism 13 is located within the avoidance groove 61 along the thickness direction of the first wall portion 1131.

Along the thickness direction of the first wall portion 1131, the avoidance groove 61 is provided on the surface of the support member 6 facing the first wall portion 1131. The avoidance groove 61 can be a circular groove, an elliptical groove, a rectangular groove, etc. The circular groove refers to a groove with a circular cross section, the elliptical groove refers to a groove with an elliptical cross section, and the rectangular groove refers to a groove with a rectangular cross section, in which the cross section is perpendicular to the thickness direction of the first wall portion 1131.

In this embodiment, the setting of the avoidance groove 61 of the support member 6 reduces the risk of the support member 6 directly acting on the pressure relief mechanism 13 and improves the service life of the pressure relief mechanism 13.

In some embodiments, referring to FIG. 34 continuously, an avoidance groove 61 is provided on the side of the support member 6 facing the first wall portion 1131. The first wall portion 1131 has a first inner surface 11312 facing the electrode assembly 2, and the first inner surface 11312 is provided with a notching groove 14; and the first wall portion 1131 forms a pressure relief mechanism 13 corresponding to the area where the notching groove 14 is provided. The first wall portion 1131 is provided with a protrusion 15 protruding from the first inner surface 11312 at the edge position of the notching groove 14 provided on the first inner surface 11312. The avoidance groove 61 is configured to accommodate at least a portion of the protrusion 15.

In this embodiment, an integrated pressure relief mechanism 13 is formed by providing a notching groove 14 on the first wall portion 1131. As an example, the notching groove 14 can be stamped on the first inner surface 11312. During the stamping process of the notching groove 14, the material accumulates on the outside of the notching groove 14, such that it can correspondingly form a protrusion 15 protruding from the first inner surface 11312.

The protrusion 15 protruding from the first inner surface 11312 can be partially located within the avoidance groove 61 or completely located within the avoidance groove 61.

In the embodiment, at least a portion of the protrusion 15 is accommodated in the avoidance groove 61. In this way, the first wall portion 1131 and support member 6 are made more compact, thereby freeing up more space for the electrode assembly 2 to improve the energy density of the battery cell 10.

In some embodiments, referring to FIG. 34 continuously, the height of the protrusion 15 along the thickness direction of the first wall portion 1131 is H₂, and the depth of the avoidance groove 61 is H₃, with H₂≤H₃.

It can be H₂=H₃ or H₂≤H₃. Along the thickness direction of the first wall portion 1131, the protrusion 15 has a second inner surface 151 that faces away from the first inner surface 11312. If H₂=H₃, the second inner surface 151 is just in contact with the bottom surface of the avoidance groove 61. If H₂<H₃, the gap between the second inner surface 151 and the bottom surface of the avoidance groove 61 is set.

In the embodiment, H₂≤H₃, which ensures that the protrusion 15 can be fully accommodated in the avoidance groove 61. On the one hand, it increases the contact area between the support member 6 and the first wall portion 1131, and improves the stability of the support member 6 inside the case 11. On the other hand, the protrusion 15 will not be subjected to the force from the support member 6, thereby reducing the risk of the support member 6 applying force to the protrusion 15 and causing a decrease in the lifespan of the pressure relief mechanism 13.

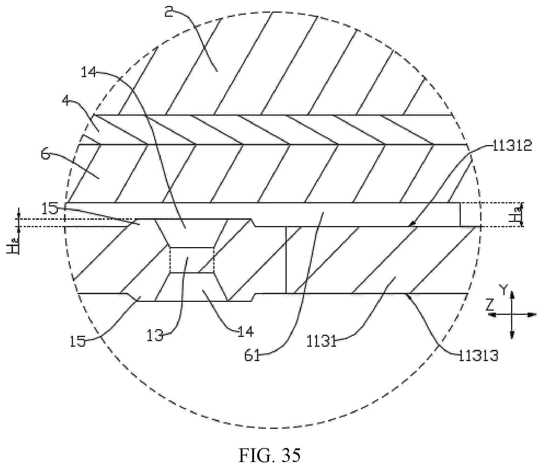

In some embodiments, referring to FIG. 35, FIG. 35 is a partially enlarged view of the battery cell 10 provided in some other embodiments of the present disclosure. The first wall portion 1131 also has a first outer surface 11313 facing away from the electrode assembly 2. Along the thickness direction of the first wall portion 1131, the first inner surface 11312 is opposite to the first outer surface 11313, and the first outer surface 11313 is provided with a notching groove 14. The notching groove 14 provided on the first outer surface 11313 is opposite to the notching groove 14 provided on the first inner surface 11312. The first wall portion 1131 forms a protrusion 15 protruding from the first outer surface 11313 at the edge position of the notching groove 14 provided on the first outer surface 11313.

The embodiment of the present disclosure provides a battery 100, which includes a battery cell 10 provided by any one of the above embodiments.

The embodiments of the present disclosure provide a powered device comprising a battery cell 10 provided in any one of the above embodiments, wherein the battery cell 10 is configured to provide electrical energy.

The embodiments of the present disclosure provide a case 11, wherein the case 11 is formed by bending a plate material, and the end faces of the front and rear ends of the case 11 are welded together to form an accommodating space 111 with openings at the two opposite ends. The accommodating space 111 is used to accommodate the electrode assembly 2 of the battery cell 10.

The case 11 is a cuboid case, and includes a first wall portion 1131, a second wall portion 1132, a third wall portion 1133, and a fourth wall portion 1134. The first wall portion 1131 is arranged opposite to the second wall portion 1132, and the third wall portion 1133 is arranged opposite to the fourth wall portion 1134. The case 11 is equipped with a pressure relief mechanism 13, which is integrally formed with the first wall portion 1131. The first wall portion 1131 is provided with a notching groove 14, and the first wall portion 1131 correspondingly forms the pressure relief mechanism 13 in the area where the notching groove 14 is provided. The first wall portion 1131 has a first inner surface 11312 facing the interior of the case 11, and a protrusion 15 protruding from the first inner surface 11312 is formed at the edge position of the notching groove 14 on the first wall portion 1131. Along the thickness direction of the first wall portion 1131, the thickness of the first wall portion 1131 is D. The residual thickness in the area where the notching groove 14 is set on the first wall portion 1131 is H₁, where H₁/D ≤ 0.7, H₁ ≥ 0.05mm, and D ≤ 0.6mm. The connection position 114 of the end faces of the front and rear ends of the plate material is located at the second wall portion 1132. The maximum distance between the third wall portion 1133 and the fourth wall portion 1134 is A, and the minimum distance between the first wall portion 1131 and the second wall portion 1132 is B, where A<B. The openings at both ends of case 11 are arranged opposite to each other along the length direction of case 11. The length of case 11 is a, the width of case 11 is b, and the height of case 11 is c, where b < c ≤ a/1.5, and a ≥ 150mm.

It should be noted that in the absence of conflicts, the embodiments and the features in the embodiments in the present disclosure can be combined with each other.

The above embodiment is only used to illustrate the technical solution of the present disclosure and is not intended to limit it. For those skilled in the art, the present disclosure may undergo various modifications and variations. Any modifications, equivalent replacements, improvements, etc. made within the spirit and principles of the present disclosure shall be included within the scope of protection of the present disclosure.

## Claims

1. A case for a battery cell, wherein the case is formed by bending a plate material, and front and rear ends of the plate material are connected to each other to form an accommodating space having openings at two opposite ends, wherein the accommodating space is configured to accommodate an electrode assembly of the battery cell.

2. The case according to claim 1, wherein the case comprises multiple wall portions, wherein the multiple wall portions form the accommodating space; and
the case is provided with a pressure relief mechanism, and a connection position of the two ends and the pressure relief mechanism are located on two different wall portions.

3. The case according to claim 2, wherein the multiple wall portions comprise a first wall portion and a second wall portion that are oppositely arranged, with the pressure relief mechanism located on the first wall portion and the connection position located on the second wall portion.

4. The case according to claim 3, wherein the second wall portion comprises a first connecting wall and a second connecting wall arranged opposite to the first wall portion, and the first connecting wall and the second connecting wall respectively form the two ends.

5. The case according to claim 4, wherein the first connecting wall has a first end face, and the second connecting wall has a second end face, wherein the first end face and the second end face are respectively the end faces of the front and rear ends of the plate material, and the first end face is connected to the second end face.

6. The case according to claim 4, wherein along a thickness direction of the first wall portion, the first connecting wall and the second connecting wall are at least partially stacked and connected to each other.

7. The case according to any one of claims 4-6, wherein the case further comprises a third wall portion and a fourth wall portion arranged oppositely, with the third wall portion connecting the first wall portion and the first connecting wall, and the fourth wall portion connecting the first wall portion and the second connecting wall.

8. The case according to claim 7, wherein a maximum distance between the third wall portion and the fourth wall portion is A, and a minimum distance between the first wall portion and the second wall portion is B, where A<B.

9. The case according to any one of claims 2-8, wherein the multiple wall portions comprise a first wall portion, and the pressure relief mechanism and the case are arranged separately, with the pressure relief mechanism installed on the first wall portion.

10. The case according to any one of claims 2-8, wherein the multiple wall portions comprise a first wall portion, and the pressure relief mechanism is integrally formed with the first wall portion.

11. The case according to claim 10, wherein the first wall portion is provided with a notching groove, and the first wall portion forms the pressure relief mechanism corresponding to an area where the notching groove is provided.

12. The case according to claim 11, wherein the first wall portion has a first inner surface facing an interior of the case, and the notching groove is provided on the first inner surface.

13. The case according to claim 11, wherein the first wall portion has a first outer surface facing away from an interior of the case, and the notching groove is provided on the first outer surface.

14. The case according to claim 11, wherein the first wall portion has a first inner surface facing an interior of the case and a first outer surface facing away from the interior of the case, wherein both the first inner surface and the first outer surface are provided with notching grooves.

15. The case according to claim 14, wherein the notching groove provided on the first outer surface is opposite to the notching groove provided on the first inner surface.

16. The case according to claim 12, 14 or 15, wherein the first wall portion is provided with a protrusion protruding from the first inner surface at an edge position of the notching groove.

17. The case according to any one of claims 13-15, wherein the first wall portion is provided with a protrusion protruding from the first outer surface at an edge position of the notching groove.

18. The case according to any one of claims 11-17, wherein along a thickness direction of the first wall portion, a thickness of the first wall portion is D, and a residual thickness of an area where the notching groove is provided on the first wall portion is H₁, where H₁/D ≤ 0.7.

19. The case according to claim 18, wherein H₁≥ 0.05mm.

20. The case according to claim 18 or 19, wherein D≤0.6mm.

21. The case according to any one of claims 11-20, wherein the notching groove comprises a first groove segment and a second groove segment, wherein the first groove segment intersects with the second groove segment.

22. The case according to claim 21, wherein the notching groove further comprises a third groove segment, wherein the first groove segment is arranged opposite to the third groove segment, and the third groove segment intersects with the second groove segment.

23. The case according to claim 22, wherein the first groove segment, the second groove segment, and the third groove segment are sequentially connected.

24. The case according to claim 22, wherein an intersection of the first groove segment and the second groove segment is at a first position, wherein the first position deviates from two ends of the first groove segment in an extension direction; and an intersection of the third groove segment and the second groove segment is at a second position, wherein the second position deviates from two ends of the third groove segment in an extension direction.

25. The case according to claim 24, wherein the first position is located at a midpoint of the first groove segment in the extension direction, and the second position is located at a midpoint of the third groove segment in the extension direction.

26. The case according to any one of claims 11-20, wherein the notching groove is a groove that extends along a non-closed trajectory.

27. The case according to claim 26, wherein the notching groove is an arc-shaped groove.

28. The case according to any one of claims 11-20, wherein the notching groove is a groove that extends along a closed trajectory.

29. The case according to claim 28, wherein the notching groove is an annular groove.

30. The case according to any one of claims 2-29, wherein the openings at both ends of the case are arranged opposite to each other along a first direction, and the multiple wall portions comprise a first wall portion, wherein the first wall portion is provided with multiple pressure relief mechanisms, wherein the multiple pressure relief mechanisms are arranged along the first direction.

31. The case according to claim 30, wherein the first wall portion is provided with two pressure relief mechanisms.

32. The case according to claim 31, wherein the two pressure relief mechanisms are respectively a first pressure relief mechanism and a second pressure relief mechanism; and
along the first direction, the case has opposite first open end and second open end, wherein the first pressure relief mechanism is closer to the first open end than the second pressure relief mechanism; a distance between the first pressure relief mechanism and the second pressure relief mechanism is K₁; a distance between the first pressure relief mechanism and the first open end is K₂; and a distance between the second pressure relief mechanism and the second open end is K₃, where K₂<K₁, and K₃<K₁.

33. The case according to any one of claims 1-5 and 7-32, wherein end faces at the front and rear ends of the plate material are connected to each other.

34. The case according to any one of claims 1-33, wherein the two ends are welded.

35. The case according to any one of claims 1-34, wherein the case comprises multiple wall portions, wherein the multiple wall portions form the accommodating space; and
a connection position between the two ends is located on one wall portion.

36. The case according to any one of claims 1-35, wherein a wall thickness of the case is L, where L ≤ 0.6mm.

37. The case according to any one of claims 1-36, wherein the case is a cuboid case.

38. The case according to claim 37, wherein the openings at both ends of the case are arranged opposite to each other along a length direction of the case, wherein the case has a length of a, a width of b, and a height of c, where b ≤ c ≤ a/1.5.

39. The case according to any one of claims 1-38, wherein the openings at both ends of the case are arranged opposite to each other along a length direction of the case, and a length of the case is a, where a ≥ 150mm.

40. The case according to claim 39, wherein a≥300mm.

41. The case according to any one of claims 1-40, wherein a material of the case comprises an aluminum alloy.

42. A battery cell, comprising:
the case according to any one of claims 1-41;
an electrode assembly, accommodated in the accommodating space; and
end covers, corresponding one-to-one with the openings, wherein the end covers close the openings.

43. The battery cell according to claim 42, wherein the case comprises a first wall portion, wherein the first wall portion is provided with a pressure relief mechanism; and
the battery cell further comprises a support member, wherein the support member is disposed between the first wall portion and the electrode assembly, and is configured to support the electrode assembly.

44. The battery cell according to claim 43, wherein an avoidance groove is provided on a side of the support member facing the first wall portion, and a projection of the pressure relief mechanism is located within the avoidance groove along a thickness direction of the first wall portion.

45. The battery cell according to claim 43 or 44, wherein an avoidance groove is provided on a side of the support member facing the first wall portion;
the first wall portion has a first inner surface facing the electrode assembly, and the first inner surface is provided with a notching groove; the first wall portion forms the pressure relief mechanism corresponding to an area where the notching groove is provided; and the first wall portion is provided with a protrusion protruding from the first inner surface at an edge position of the notching groove; and
the avoidance groove is configured to accommodate at least a portion of the protrusion.

46. The battery cell according to claim 45, wherein a height of the protrusion along a thickness direction of the first wall portion is H₂, and a depth of the avoidance groove is H₃, with H₂≤H₃.

47. A battery, comprising the battery cell according to any one of claims 42-46.

48. A powered device, comprising the battery cell according to any one of claims 42-46, wherein the battery cell is configured to provide an electric energy.
